(19) Europäisches Patentamt / European Patent Office / Office européen des brevets

(11) **EP 4 546 874 A1**

(12) **EUROPEAN PATENT APPLICATION**
published in accordance with Art. 153(4) EPC

(43) Date of publication:
30.04.2025 Bulletin 2025/18

(21) Application number: 23826177.0

(22) Date of filing: 09.06.2023

(51) International Patent Classification (IPC):
*H04W 48/08* (2009.01)

(52) Cooperative Patent Classification (CPC):
H04W 48/08; H04W 56/00

(86) International application number:
PCT/CN2023/099409

(87) International publication number:
WO 2023/246528 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.06.2022 CN 202210731545

(71) Applicant: Datang Mobile Communications
Equipment Co., Ltd.
Beijing 100085 (CN)

(72) Inventors:
• ZHANG, Xin
  Beijing 100085 (CN)
• SU, Xin
  Beijing 100085 (CN)
• SONG, Lei
  Beijing 100085 (CN)

(74) Representative: Studio Torta S.p.A.
Via Viotti, 9
10121 Torino (IT)

(54) **SSB TRANSMISSION METHOD AND APPARATUS, AND STORAGE MEDIUM**

(57) Embodiments of the present disclosure provide an SSB transmission method and apparatus, and a storage medium. The method comprises: a terminal receives a target index SSB forwarded by a first secondary node, the target index SSB comprising one or more SSBs having a same index in a plurality of SSBs forwarded by the first secondary node, wherein in the plurality of SSBs forwarded by the first secondary node, the SSB indicated by each index corresponds to a node status of the first secondary node. According to the SSB transmission method and apparatus, and the storage medium provided in the embodiments of the present disclosure, status switching is performed by means of a secondary node, and an SSB indicated by each index corresponds to a node status of the secondary node, so that SSBs sent by a network device can be forwarded to a terminal by the secondary node in a scanning manner by using a plurality of beams, thereby ensuring that a terminal in a non-RRC connected state located in an area such as a cell blind area or a cell edge can detect the SSBs sent by the network device and then access a network normally.

> Receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node

401

FIG. 4

EP 4 546 874 A1

**Description**

CROSS-REFERENCES TO RELATED APPLICATIONS

The present application claims priority to Chinese patent application No. 2022107315454 filed on June 25, 2022, entitled "SSB Transmission Method and Apparatus, and Storage Medium", which is hereby incorporated by reference in its entirety.

FIELD

The present application relates to the field of communications, and in particular, to synchronization signal block (SSB) transmission methods and apparatuses, and storage media.

BACKGROUND

Before data transmission of a terminal/user equipment (UE) and a base station, uplink and downlink synchronization must be completed through an initial access procedure to connect to a network.

In case of using a reconfigurable intelligent meta-surface (RIS) to solve blind spot coverage or user coverage at cell edge, due to the lack of sidelink between the UE and the base station, the UE may hardly detect a broadcast signal from the base station, and the base station may not receive an access request from the UE. It is necessary to forward (reflect/transmit) the broadcast signal from the base station to the UE and forward the access request from the UE to the base station through the RIS.

At present, there is no solution for using a dynamic RIS to forward a synchronization signal block (SSB), which leads to a problem where UEs in blind spots or edge areas of the cell cannot access the network.

BRIEF SUMMARY

Embodiments of the present application provide synchronization signal block (SSB) transmission methods and apparatuses, and storage media to solve the problem in the related art that user equipment (UE) cannot access the network through dynamic reconfigurable intelligent meta-surface (RIS).

An embodiment of the present application provides a synchronization signal block (SSB) transmission method, performed by a terminal, including:

receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

In some embodiments, after receiving the SSB with target index forwarded from the first auxiliary node, the method further includes:

transmitting an access request message; and
receiving an access response message forwarded from the first auxiliary node using a target node state, where the target node state is a node state used by the first auxiliary node in case of transmitting the SSB with target index.

In some embodiments, the multiple SSBs forwarded from the first auxiliary node include SSBs transmitted in multiple different given time periods, and indexes of one or more SSBs transmitted in each given time period are the same.

In some embodiments, indexes of SSBs transmitted in different given time periods are different.

In some embodiments, indexes of SSBs transmitted in different given time periods are the same.

An embodiment of the present application provides a synchronization signal block (SSB) transmission method, performed by a first auxiliary node, including:

receiving multiple SSBs transmitted from a network device; and
forwarding the multiple SSBs, where SSB indicated by each index corresponds to one node state of the first auxiliary node.

In some embodiments, before forwarding the multiple SSBs, the method further includes:

receiving multiple pieces of first node state indication information transmitted from the network device, where the first node state indication information is used to indicate a node state used by the first auxiliary node in case of forwarding SSB.

In some embodiments, forwarding the multiple SSBs includes:

obtaining a trigger message transmitted from the network device; and
forwarding the multiple SSBs in multiple different given time periods, where indexes of one or more SSBs forwarded in each given time period are the same.

In some embodiments, before forwarding the multiple SSBs, the method further includes:
synchronizing with the network device.
In some embodiments, forwarding the multiple SSBs includes:
forwarding the multiple SSBs in multiple different given time periods, where indexes of one or more SSBs forwarded in each given time period are the same.
In some embodiments, indexes of SSBs transmitted in different given time periods are different.
In some embodiments, indexes of SSBs transmitted in different given time periods are the same.
In some embodiments, during a duration of transmitting an SSB with target index, receiving an access request message transmitted from a terminal, where the SSB with target index includes one or more SSBs with the same index among multiple SSBs transmitted from the network device;

forwarding the access request message to the network device;
receiving an access response message transmitted from the network device; and
forwarding the access response message to the terminal using a target node state, where the target node state is a node state used in case of transmitting the SSB with target index.

An embodiment of the present application provides a synchronization signal block (SSB) transmission method, performed by a network device, including:
transmitting multiple SSBs to a first auxiliary node, where indexes corresponding to the multiple SSBs form a first SSB group, and SSB groups corresponding to multiple SSBs transmitted by the network device to different auxiliary nodes are different.
In some embodiments, before transmitting the multiple SSBs to the first auxiliary node, the method further includes:
transmitting multiple pieces of first node state indication information to the first auxiliary node, where the first node state indication information is used to indicate a node state used by the first auxiliary node in case of forwarding SSB.
In some embodiments, before transmitting the multiple SSBs to the first auxiliary node, the method further includes:
synchronizing with the first auxiliary node.
In some embodiments, transmitting the multiple SSBs to the first auxiliary node includes:
transmitting the multiple SSBs to the first auxiliary node in multiple different given time periods, where indexes of one or more SSBs transmitted in each given time period are the same.
In some embodiments, transmitting the multiple SSBs to the first auxiliary node includes:

transmitting a trigger message to the first auxiliary node; and
transmitting the multiple SSBs in multiple different given time periods, where indexes of one or more SSBs transmitted in each given time period are the same.

In some embodiments, the different given time periods are consecutive.
In some embodiments, the different given time periods are at intervals.
In some embodiments, during a duration of transmitting an SSB with target index to the first auxiliary node, receiving an access request message forwarded from the first auxiliary node; and
transmitting an access response message and second node state indication information to the first auxiliary node, where the second node state indication information is used to indicate the first auxiliary node to forward the access response message to a terminal using a target node state, and the target node state is a node state used by the first auxiliary node in case of forwarding the SSB with target index.
An embodiment of the present application provides a terminal, including a memory, a transceiver, and a processor, where
the memory is used for storing a computer program; the transceiver is used for receiving and transmitting data under control of the processor; and the processor is used for reading the computer program in the memory and performing the following operations:
receiving a synchronization signal block (SSB) with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

In some embodiments, after receiving the SSB with target index forwarded from the first auxiliary node, the operations further include:

transmitting an access request message; and

receiving an access response message forwarded from the first auxiliary node using a target node state, where the target node state is a node state used by the first auxiliary node in case of transmitting the SSB with target index.

In some embodiments, the multiple SSBs forwarded from the first auxiliary node include SSBs transmitted in multiple different given time periods, and indexes of one or more SSBs transmitted in each given time period are the same.

In some embodiments, indexes of SSBs transmitted in different given time periods are different.

In some embodiments, indexes of SSBs transmitted in different given time periods are the same.

An embodiment of the present application provides a first auxiliary node, including a memory, a transceiver, and a processor, where

the memory is used for storing a computer program; the transceiver is used for receiving and transmitting data under control of the processor; and the processor is used for reading the computer program in the memory and performing the following operations:

receiving multiple synchronization signal blocks (SSBs) transmitted from a network device; and

forwarding the multiple SSBs, where SSB indicated by each index corresponds to one node state of the first auxiliary node.

In some embodiments, before forwarding the multiple SSBs, the operations further include:
receiving multiple pieces of first node state indication information transmitted from the network device, where the first node state indication information is used to indicate a node state used by the first auxiliary node in case of forwarding SSB.

In some embodiments, forwarding the multiple SSBs includes:

obtaining a trigger message transmitted from the network device; and

forwarding the multiple SSBs in multiple different given time periods, where indexes of one or more SSBs forwarded in each given time period are the same.

In some embodiments, before forwarding the multiple SSBs, the operations further include:
synchronizing with the network device.

In some embodiments, forwarding the multiple SSBs includes:
forwarding the multiple SSBs in multiple different given time periods, where indexes of one or more SSBs forwarded in each given time period are the same.

In some embodiments, indexes of SSBs transmitted in different given time periods are different.

In some embodiments, indexes of SSBs transmitted in different given time periods are the same.

In some embodiments, during a duration of transmitting an SSB with target index, receiving an access request message transmitted from a terminal, where the SSB with target index includes one or more SSBs with the same index among multiple SSBs transmitted from the network device;

forwarding the access request message to the network device;

receiving an access response message transmitted from the network device; and

forwarding the access response message to the terminal using a target node state, where the target node state is a node state used in case of transmitting the SSB with target index.

An embodiment of the present application provides a network device, including a memory, a transceiver, and a processor, where

the memory is used for storing a computer program; the transceiver is used for receiving and transmitting data under control of the processor; and the processor is used for reading the computer program in the memory and performing the following operations:
transmitting multiple synchronization signal blocks (SSBs) to a first auxiliary node, where indexes corresponding to the multiple SSBs form a first SSB group, and SSB groups corresponding to multiple SSBs transmitted by the network device to different auxiliary nodes are different.

In some embodiments, before transmitting the multiple SSBs to the first auxiliary node, the operations further include:
transmitting multiple pieces of first node state indication information to the first auxiliary node, where the first node state indication information is used to indicate a node state used by the first auxiliary node in case of forwarding SSB.

In some embodiments, before transmitting the multiple SSBs to the first auxiliary node, the operations further include:

synchronizing with the first auxiliary node.

In some embodiments, transmitting the multiple SSBs to the first auxiliary node includes:

transmitting the multiple SSBs to the first auxiliary node in multiple different given time periods, where indexes of one or more SSBs transmitted in each given time period are the same.

In some embodiments, transmitting the multiple SSBs to the first auxiliary node includes:

transmitting a trigger message to the first auxiliary node; and
transmitting the multiple SSBs in multiple different given time periods, where indexes of one or more SSBs transmitted in each given time period are the same.

In some embodiments, the different given time periods are consecutive.

In some embodiments, the different given time periods are at intervals.

In some embodiments, during a duration of transmitting an SSB with target index to the first auxiliary node, receiving an access request message forwarded from the first auxiliary node; and

transmitting an access response message and second node state indication information to the first auxiliary node, where the second node state indication information is used to indicate the first auxiliary node to forward the access response message to a terminal using a target node state, and the target node state is a node state used by the first auxiliary node in case of forwarding the SSB with target index.

An embodiment of the present application provides a synchronization signal block (SSB) transmission apparatus, including:

a first receiving module, used for receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

In some embodiments, the apparatus further includes a second transmitting module and a third receiving module;

the second transmitting module is used for transmitting an access request message; and
the third receiving module is used for receiving an access response message forwarded from the first auxiliary node using a target node state, where the target node state is a node state used by the first auxiliary node in case of transmitting the SSB with target index.

In some embodiments, the multiple SSBs forwarded from the first auxiliary node include SSBs transmitted in multiple different given time periods, and indexes of one or more SSBs transmitted in each given time period are the same.

In some embodiments, indexes of SSBs transmitted in different given time periods are different.

In some embodiments, indexes of SSBs transmitted in different given time periods are the same.

An embodiment of the present application provides a synchronization signal block (SSB) transmission apparatus, including:

a second receiving module, used for receiving multiple SSBs transmitted from a network device; and
a first forwarding module, used for forwarding the multiple SSBs, where SSB indicated by each index corresponds to one node state.

In some embodiments, the apparatus further includes a fourth receiving module;

the fourth receiving module is used for receiving multiple pieces of first node state indication information transmitted from the network device, where the first node state indication information is used to indicate a node state used by the first auxiliary node in case of forwarding SSB.

In some embodiments, the first forwarding module includes an obtaining unit and a forwarding unit;

the obtaining unit is used for obtaining a trigger message transmitted from the network device; and
the forwarding unit is used for forwarding the multiple SSBs in multiple different given time periods, where indexes of one or more SSBs forwarded in each given time period are the same.

In some embodiments, the apparatus further includes a first synchronizing module;

the first synchronizing module is used for synchronizing with the network device.

In some embodiments, forwarding the multiple SSBs includes:
forwarding the multiple SSBs in multiple different given time periods, where indexes of one or more SSBs forwarded in each given time period are the same.

In some embodiments, indexes of SSBs transmitted in different given time periods are different.

In some embodiments, indexes of SSBs transmitted in different given time periods are the same.

In some embodiments, the apparatus further includes a fifth receiving module, a second forwarding module, a sixth receiving module, and a third forwarding module;

during a duration of transmitting an SSB with target index, the fifth receiving module is used for receiving an access request message transmitted from a terminal, where the SSB with target index includes one or more SSBs with the same index among multiple SSBs transmitted from the network device;
the second forwarding module is used for forwarding the access request message to the network device;
the sixth receiving module is used for receiving an access response message transmitted from the network device; and
the third forwarding module is used for forwarding the access response message to the terminal using a target node state, where the target node state is a node state used in case of transmitting the SSB with target index.

An embodiment of the present application provides synchronization signal block (SSB) transmission apparatus, including:
a first transmitting module, used for transmitting multiple SSBs to a first auxiliary node, where indexes corresponding to the multiple SSBs form a first SSB group, and SSB groups corresponding to multiple SSBs transmitted to different auxiliary nodes are different.

In some embodiments, the apparatus further includes a third transmitting module;
the third transmitting module is used for transmitting multiple pieces of first node state indication information to the first auxiliary node, where the first node state indication information is used to indicate a node state used by the first auxiliary node in case of forwarding SSB.

In some embodiments, the apparatus further includes a second synchronizing module;
the second synchronizing module is used for synchronizing with the first auxiliary node.

In some embodiments, transmitting the multiple SSBs to the first auxiliary node includes:
transmitting the multiple SSBs to the first auxiliary node in multiple different given time periods, where indexes of one or more SSBs transmitted in each given time period are the same.

In some embodiments, transmitting the multiple SSBs to the first auxiliary node includes:

transmitting a trigger message to the first auxiliary node; and
transmitting the multiple SSBs in multiple different given time periods, where indexes of one or more SSBs transmitted in each given time period are the same.

In some embodiments, the different given time periods are consecutive.

In some embodiments, the different given time periods are at intervals.

In some embodiments, the apparatus further includes a seventh receiving module and a fourth transmitting module; during a duration of transmitting an SSB with target index to the first auxiliary node, the seventh receiving module is used for receiving an access request message forwarded from the first auxiliary node; and
the fourth transmitting module is used for transmitting an access response message and second node state indication information to the first auxiliary node, where the second node state indication information is used to indicate the first auxiliary node to forward the access response message to a terminal using a target node state, and the target node state is a node state used by the first auxiliary node in case of forwarding the SSB with target index.

An embodiment of the present application further provides a processor-readable storage medium storing a computer program, where the computer program is used to cause a processor to perform any of the methods described above.

An embodiment of the present application further provides a computer-readable storage medium storing a computer program, where the computer program is used to cause a computer to perform any of the methods described above.

An embodiment of the present application further provides a communication-device-readable storage medium storing a computer program, where the computer program is used to cause a communication device to perform any of the methods described above.

An embodiment of the present application further provides a chip-product-readable storage medium storing a computer program, where the computer program is used to cause a chip product to perform any of the methods described above.

In the SSB transmission methods and apparatuses, and storage media provided in the embodiments of the present application, states are switched through the auxiliary node, and SSB indicated by each index corresponds to one node state of the auxiliary node. The SSB transmitted from the network device may be forwarded to the UE by the auxiliary node in a scanning manner using multiple beams, ensuring that UEs located in areas such as cell blind spots or cell edges that are in non-radio-resource-control (RRC)-connection state may detect the SSB transmitted from the network device and access the network normally.

BRIEF DESCRIPTION OF THE DRAWINGS

To illustrate the solutions in the embodiments of the present application or the related art more clearly, the drawings used in the description of the embodiments or the related art are briefly described below. The drawings in the following description are only some embodiments of the present application, and other drawings may be obtained based on these drawings without any creative effort for those skilled in the art.

FIG. 1 is a schematic diagram of beam scanning;

FIG. 2 is a schematic structural diagram of a synchronization signal block (SSB);

FIG. 3 is a schematic structural diagram of a reconfigurable intelligent meta-surface (RIS) assisted radio communication system;

FIG. 4 is a first schematic flowchart of an SSB transmission method according to an embodiment of the present application;

FIG. 5 is a schematic topology diagram of a RIS-assisted coverage area according to an embodiment of the present application;

FIG. 6 is a schematic diagram of a correspondence between SSB beams and RISs according to an embodiment of the present application;

FIG. 7 is a schematic diagram of a duration of an SSB group according to an embodiment of the present application;

FIG. 8 is a first schematic diagram of receiving occasion of SSB according to an embodiment of the present application;

FIG. 9 is a second schematic diagram of receiving occasion of SSB according to an embodiment of the present application;

FIG. 10 is a schematic diagram of receiving occasion of SSB under separate scanning according to an embodiment of the present application;

FIG. 11 is a third schematic diagram of receiving occasion of SSB according to an embodiment of the present application;

FIG. 12 is a schematic diagram of receiving occasion of RIS according to an embodiment of the present application;

FIG. 13 is a second schematic flowchart of an SSB transmission method according to an embodiment of the present application;

FIG. 14 is a third schematic flowchart of an SSB transmission method according to an embodiment of the present application;

FIG. 15 is a schematic structural diagram of a terminal according to an embodiment of the present application;

FIG. 16 is a schematic structural diagram of a first auxiliary node according to an embodiment of the present application;

FIG. 17 is a schematic structural diagram of a network device according to an embodiment of the present application;

FIG. 18 is first schematic structural diagram of an SSB transmission apparatus according to an embodiment of the present application;

FIG. 19 is a second schematic structural diagram of an SSB transmission apparatus according to an embodiment of the present application; and

FIG. 20 is a third schematic structural diagram of an SSB transmission apparatus according to an embodiment of the present application.

DETAILED DESCRIPTION

Before UE and a network transmit data, UE and the base station must connect to a network through an initial access procedure. The initial access procedure includes stages such as cell search, system information reception, and random access.

Cell search stage: a base station transmits synchronization signal blocks (SSBs) at a period, and the UE uses the SSBs for downlink time synchronization and frequency synchronization, and obtains a physical cell identifier (PCID).

System information reception stage: the UE receives and decodes a physical broadcast channel (PBCH) transmitted from the base station and a physical downlink shared channel (PDSCH) carrying remaining minimum system information, and obtains necessary system information for a subsequent random access.

Random access stage: uplink time synchronization is achieved through a random access procedure of the UE, and the UE in non-radio resource control (RRC) connected state switches to RRC connected state to prepare for uplink and downlink data transmission.

The propagation loss of high-frequency carriers is high, and beamforming transmission is needed to increase the coverage range of radio signals. Due to the limited coverage angle of each beam, the 5th generation mobile communication (5G) new radio (NR) generally covers the entire service range of the cell through beam scanning.

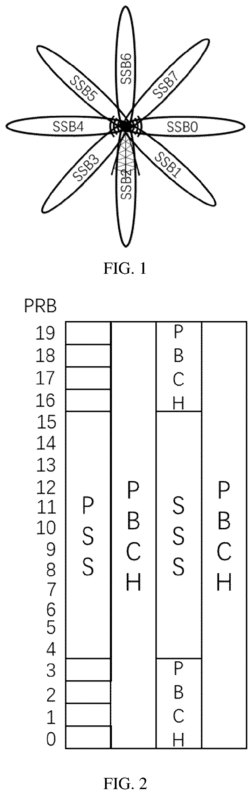

FIG. 1 is a schematic diagram of beam scanning. As shown in FIG. 1, the beam scanning refers to the use of beams in different directions to transmit/receive physical channels or physical signals at different times. A cell generally needs to transmit multiple SSBs to complete one SSB scanning, to make the synchronization signal cover the entire service area of the cell. The SSBs required to complete one beam scanning form an SSB burst set.

FIG. 2 is a schematic structural diagram of an SSB. As shown in FIG. 2, an SSB includes primary synchronization signal (PSS), secondary synchronization signal (SSS), and physical broadcast channel (PBCH). PSS, SSS, and PBCH are transmitted in time division multiplexing (TDM), where one SSB occupies four orthogonal frequency division multiplexing (OFDM) symbols, with PSS and SSS each occupying one symbol, and PBCH occupying two symbols, in the order of PSS-PBCH-SSS-PBCH. The bandwidth of one SSB is 20 physical resource blocks (PRBs), where the bandwidth of PSS and SSS is 12 PRBs, and the bandwidth of PBCH is 20 PRBs. The center frequencies of PSS/SSS and PBCH are aligned. In addition, PBCH also occupies a portion of the PRB of the OFDM symbol where SSS is located, and the PSS, SSS, and PBCH in each SSB use the same subcarrier spacing.

In case of using an auxiliary node to assist a base station in enhancing coverage, especially in the coverage of cell edge and blind spot area, the signals transmitted from the base station are mainly forwarded (reflected/transmitted) to the UE through the auxiliary node, and the signals transmitted from the UE also need to be forwarded to the base station through the auxiliary node.

The auxiliary node may be a reconfigurable intelligent meta-surface (RIS), a smart repeater, a network-controlled repeaters-mobile terminal (ncr-mt), a relay, or other network nodes. The embodiments of the present application mainly use RIS as an auxiliary node for illustration.

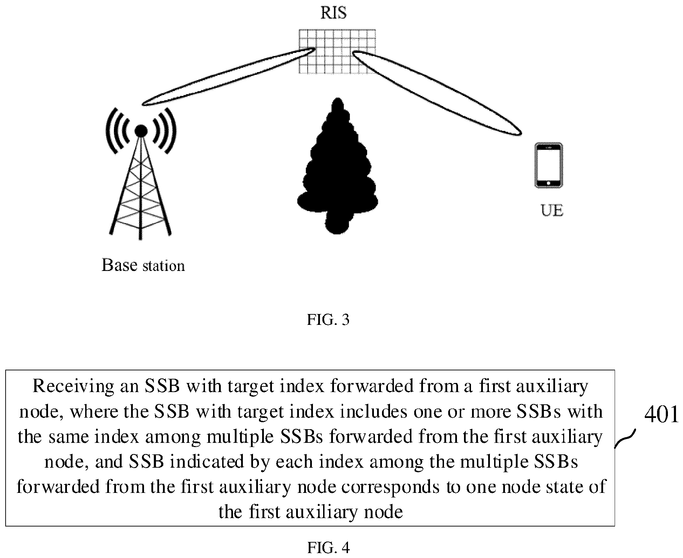

FIG. 3 is a schematic structural diagram of a RIS-assisted radio communication system. As shown in FIG. 3, the regulation for reflected beams by RIS is controlled by a base station through an air interface or a wired control. The higher the frequency band, the narrower the beam. The effectiveness of regulation of RIS by the base station depends on channel information of RIS-UE obtained by the network or location information of UE. The RIS-assisted enhanced coverage scheme in the related art focuses more on static/semi-static RIS for coverage enhancement. Static/semi-static RIS refers to RIS states that are fixed or being switched once for a long time, with a relatively fixed coverage area, widely formed beam, and small forming gain, resulting in a small coverage area. In addition, the scheme considering RIS state switch based on demands only targets the data transmission link and does not take into account the access of UEs in non-RRC connected state. In areas such as blind spots and cell edges, the UEs in non-RRC connected state still have the problem of being unable to detect SSB signals transmitted from base stations, which leads to a problem where UEs cannot access the network.

Based on the above problems, embodiments of the present application provide an SSB transmission method, in which states are switched through the auxiliary node, and SSB indicated by each index corresponds to one node state of the auxiliary node. The SSB transmitted from the network device may be forwarded to the UE by the auxiliary node in a scanning manner using multiple beams, ensuring the UEs that located in areas such as blind spots or edges of a cell and are in non-RRC connected state may detect the SSB transmitted from the network device and access the network normally.

To make the objectives, solutions, and advantages of the embodiments of the present application more clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

FIG. 4 is a first schematic flowchart of a synchronization signal block (SSB) transmission method according to an embodiment of the present application. As shown in FIG. 4, an embodiment of the present application provides an SSB transmission method, which may be performed by a terminal/user equipment (UE), such as a mobile phone, etc. The method includes:

step 401: receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

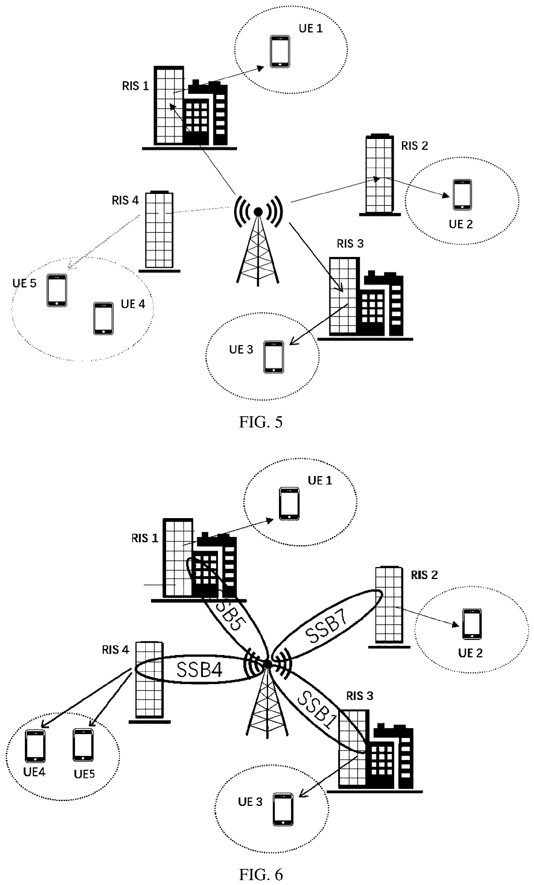

FIG. 5 is a schematic topology diagram of a RIS-assisted coverage area according to an embodiment of the present application. As shown in FIG. 5, each RIS covers an area (such as an area at the edge of a cell, blind spots in a cell, etc.).

In the embodiments of the present application, an SSB group is defined. For example, one SSB group includes K SSBs (the structure of one SSB is shown in FIG. 2, i.e., SSB in NR), and the indexes of these K SSBs may be the same or different. An identifier is assigned to each SSB group, which is referred to as an SSB group index.

In an embodiment, SSBs for different usages may also be identified, such as identifying SSBs used for RIS as RIS SSB index.

In an embodiment, RIS has multiple states (phase shift matrix or beamforming), with each state covering one area, and different states covering different areas. Each RIS state corresponds to one or more SSBs, that is, RIS forwards one or more SSBs to UE in each RIS state.

FIG. 6 is a schematic diagram of a correspondence between SSB beams and RISs according to an embodiment of the present application. As shown in FIG. 6, a cell is covered by multiple SSB groups, that is, the SSB burst set used by network devices for SSB scanning includes multiple SSB groups and each SSB group includes K SSBs, where K is greater than or equal to 1.

In the embodiments of the present application, the network device may be a base station.

During the synchronization procedure, a network device performs SSB scanning at a period, with each SSB group index indicating one SSB group. In the duration of transmitting SSB groups, K SSBs are transmitted, and assuming that the duration of each SSB is $\tau$, the duration of each SSB group is $K\tau$.

In an embodiment, the network device transmits multiple SSBs to the first auxiliary node, and the indexes corresponding to the multiple SSBs form a first SSB group.

One RIS corresponds to one or more SSB groups, for example, in FIG. 6, RIS 1 corresponds to SSB group 5 (represented by SSB5 in the figure), meaning that RIS 1 is covered by SSB group 5, RIS 2 corresponds to SSB group 7 (represented by SSB7 in the figure), meaning that RIS 2 is covered by SSB group 7, RIS 3 corresponds to SSB group 1 (represented by SSB1 in the figure), meaning that RIS 3 is covered by SSB group 1, and RIS 4 corresponds to SSB group 4 (represented by SSB4 in the figure), meaning that RIS 4 is covered by SSB group 4.

In an embodiment, the first auxiliary node receives multiple SSBs transmitted from the network device; the first auxiliary node forwards the multiple SSBs; and the SSB indicated by each index corresponds to one node state of the first auxiliary node.

In an embodiment, after receiving the multiple SSBs transmitted from the network device, the first auxiliary node performs a state switch to forward the SSBs to the UE.

In an embodiment, forwarding may refer to the reflection of RIS or the transmission of RIS.

RIS may perform state switch periodically or aperiodically.

In an embodiment, the multiple SSBs forwarded from the first auxiliary node include SSBs transmitted in multiple different given time periods, and indexes of one or more SSBs transmitted in each given time period are the same.

In an embodiment, indexes of SSBs transmitted in different given time periods are different.

For example, in FIG. 6, RIS 1 receives 8 SSBs transmitted from the base station, with indexes of 0, 1, 2, and 3 respectively. Each index includes 2 SSBs. These 8 SSBs form SSB group 5. RIS 1 has 4 states. RIS 1 forwards two SSBs with index 0 in state 1, forwards two SSBs with index 1 in state 2, forwards two SSBs with index 2 in state 3, and forwards two SSBs with index 3 in state 4.

In an embodiment, indexes of SSBs transmitted in different given time periods are the same.

For example, in FIG. 6, RIS 1 receives 8 SSBs transmitted from the base station, and indexes of the 8 SSBs are all 0. These 8 SSBs form SSB group 5. RIS 1 has 4 states. RIS 1 forwards two SSBs in state 1, forwards two SSBs in state 2, forwards two SSBs in state 3, and forwards two SSBs in state 4.

In an embodiment, the terminal receives the SSB with target index forwarded from the first auxiliary node, where the SSB with target index includes one or more SSBs with the same index among multiple SSBs forwarded from the first auxiliary node.

Since the RIS has multiple states, each state covers one area, and different states cover different areas. RIS may transmit SSBs using different states one by one respectively, and UEs within the coverage area of the RIS always receive SSBs forwarded from the RIS.

For example, in FIG. 6, RIS 1 receives 8 SSBs transmitted from the base station, with indexes of 0, 1, 2, and 3 respectively. Each index includes 2 SSBs. These 8 SSBs form SSB group 5. RIS 1 has 4 states. RIS 1 forwards two SSBs with index 0 in state 1, forwards two SSBs with index 1 in state 2, forwards two SSBs with index 2 in state 3, and forwards two SSBs with index 3 in state 4. If a UE is within the coverage area of RIS 1 in state 2, the UE receives two SSBs with index 1 forwarded from RIS 1.

In an embodiment, after receiving the SSB with target index forwarded from the first auxiliary node, the method further includes:

transmitting an access request message; and

receiving an access response message forwarded from the first auxiliary node using a target node state, where the target node state is a node state used by the first auxiliary node in case of transmitting the SSB with target index.

In an embodiment, after receiving the SSB with target index forwarded from the first auxiliary node, the UE transmits the access request message.

The first auxiliary node receives the access request message transmitted from the UE and forwards the access request message to the network device.

After receiving the access request message forwarded from the first auxiliary node, the network device transmits an access response message to the first auxiliary node.

After receiving the access response message transmitted from the network device, the first auxiliary node forwards the access response message to the UE.

Due to the fixed position of RIS and base station, the beam from base station to RIS is determined, and the state of RIS is controlled by the base station. Alternatively, while RIS is synchronized with the base station, the base station knows the state of RIS when forwarding SSB within a given time period. Therefore, during the given time period when RIS forwards the SSB with target index, in case that the access request signal initiated by the UE is received by the base station, the base station determines the beam of the base station and the state of RIS.

For example, in FIG. 6, RIS 1 receives 8 SSBs transmitted from the base station, with indexes of 0, 1, 2, and 3 respectively. Each index includes 2 SSBs. These 8 SSBs form SSB group 5. RIS 1 has 4 states. RIS 1 forwards two SSBs with index 0 in state 1, forwards two SSBs with index 1 in state 2, forwards two SSBs with index 2 in state 3, and forwards two SSBs with index 3 in state 4. If the UE is within the coverage area of RIS 1 in state 2, the UE receives the two SSBs with index 1 forwarded from RIS 1. During the duration of RIS 1 forwarding the two SSBs with index 1, the base station receives the access request transmitted from the UE correspondingly. After receiving the access request, the base station may determine that the beam of the base station is the beam for transmitting SSB group 5, and the state of RIS 1 is state 2.

In the embodiments of the present application, the random access procedure may adopt either 2-step random access or 4-step random access.

The switching period t of RIS in the random access stage may be equal to or different from the duration of the SSB in the synchronization procedure (i.e., the switching period of RIS).

In an embodiment, the first auxiliary node may or may not synchronize with the network device before forwarding the SSB.

In case that the first auxiliary node is not synchronized with the network device, the network device needs to transmit multiple pieces of first node state indication information to the first auxiliary node. The first node state indication information is used to indicate the node state used by the first auxiliary node in case of forwarding SSB.

The first auxiliary node receives multiple pieces of first node state indication information transmitted from the network device.

For example, in FIG. 6, RIS 1 receives 8 SSBs transmitted from the base station, with indexes of 0, 1, 2, and 3 respectively. Each index includes 2 SSBs. These 8 SSBs form SSB group 5. RIS 1 has 4 states. The base station also transmits state indication information to RIS 1 when transmitting the 8 SSBs, indicating RIS 1 to forward two SSBs with index 0 in state 1, forward two SSBs with index 1 in state 2, forward two SSBs with index 2 in state 3, and forward two SSBs with index 3 in state 4.

In case that the first auxiliary node is not synchronized with the network device, it may also be triggered by a command (such as a specifically numbered SSB), and then RIS switches states based on a given timing sequence and a corresponding relationship with SSB.

In an embodiment, the network device transmits a trigger message to the first auxiliary node. The first auxiliary node obtains the trigger message transmitted from the network device.

The network device transmits multiple SSBs in multiple different given time periods respectively, where indexes of one or more SSBs transmitted in each given time period are the same. Each given time period corresponds to one node state of the first auxiliary node, and the duration of each given time period may be $X\tau$, where X represents the number of SSBs transmitted in the given time period.

The first auxiliary node forwards multiple SSBs in multiple different given time periods respectively, and indexes of one or more SSBs transmitted in each given time period are the same.

For example, in FIG. 6, RIS 1 receives 8 SSBs transmitted from the base station, with indexes of 0, 1, 2, and 3 respectively. Each index includes 2 SSBs. These 8 SSBs form SSB group 5. RIS has 4 states. The base station transmits SSBs in the order of 0, 1, 2, and 3. The SSB with index 0 is a specific SSB and is regarded as a trigger condition. RIS 1 automatically switches states after receiving the first SSB with index 0. RIS 1 forwards two SSBs with index 0 in state 1, forwards two SSBs with index 1 in state 2, forwards two SSBs with index 2 in state 3, and forwards two SSBs with index 3 in state 4.

In case that the first auxiliary node is synchronized with the network device, the network device does not need to transmit the node state indication information to the first auxiliary node, nor does it need to transmit the trigger message to the first auxiliary node. It is only needed to transmit the corresponding SSB during the given time period, and the RIS automatically switches states at a corresponding time point and forwards the SSB to the UE.

In this case, the synchronization operation between the first auxiliary node and the network device needs to be performed first.

After the first auxiliary node is synchronized with the network device, the network device transmits multiple SSBs to the first auxiliary node in multiple different given time periods respectively, and the indexes of one or more SSBs transmitted in each given time period are the same.

The first auxiliary node forwards multiple SSBs in multiple different given time periods respectively, and indexes of one or more SSBs transmitted in each given time period are the same.

In an embodiment, the different given time periods are consecutive.

For example, in FIG. 6, RIS 1 receives 8 SSBs transmitted from the base station, with indexes of 0, 1, 2, and 3 respectively. Each index includes 2 SSBs. These 8 SSBs form SSB group 5. The base station transmits 2 SSBs within a given time period. In case that the beam of the base station scans RIS 1, the base station transmits 2 SSBs with index 0 to RIS 1 in the first given time period, then continues to transmit 2 SSBs with index 1 to RIS 1 in the second given time period, then continues to transmit 2 SSBs with index 2 to RIS 1 in the third given time period, and then continues to transmit 2 SSBs with index 2 to RIS 1 in the fourth given time period. In this case, the first given time period, second given time period, third given time period, and fourth given time period are consecutive. Correspondingly, RIS 1 forwards two SSBs with index 0 in state 1 (corresponding to the first given time period), forwards two SSBs with index 1 in state 2 (corresponding to the second given time period), forwards two SSBs with index 2 in state 3 (corresponding to the third given time period), and forwards two SSBs with index 3 in state 4 (corresponding to the fourth given time period).

In an embodiment, the different given time periods are at intervals.

For example, in FIG. 6, RIS 1 receives 8 SSBs transmitted from the base station, with indexes of 0, 1, 2, and 3 respectively. Each index includes 2 SSBs. These 8 SSBs form SSB group 5. The base station transmits 2 SSBs within a given time period. In case that the beam of the base station scans RIS 1, the base station transmits the two SSBs with index 0 to RIS 1 in the first given time period. Then, the beam of the base station scans other RISs or UEs. In case of scanning RIS 1 again, the base station transmits two SSBs with index 1 to RIS 1 in the second given time period. Then, the beam of the base station scans other RISs or UEs. In case of scanning RIS 1 for the third time, the base station transmits two SSBs with index 2 to RIS 1 in the third given time period. Then the beam of the base station will scan other RIS or UE. In case of scanning RIS 1 for the fourth time, the base station transmits two SSBs with index 2 to RIS 1 in the fourth given time period. In this case, the first given time period, second given time period, third given time period, and fourth given time period are non-consecutive and at intervals. Correspondingly, RIS 1 forwards two SSBs with index 0 in state 1 (corresponding to the first given time period), forwards two SSBs with index 1 in state 2 (corresponding to the second given time period), forwards two SSBs with index 2 in state 3 (corresponding to the third given time period), and forwards two SSBs with index 3 in state 4 (corresponding to the fourth given time period).

Below are several specific examples to further explain the methods in the above embodiments.

I. Unified scanning of SSB group index within a cell

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes covering RISs of the base station is shown in Table 1.

Table 1 SSB group indexes covering different RISs

| RIS index | SSB group index |
|-----------|-----------------|
| 1 | 5 |
| 2 | 7 |
| 3 | 1 |
| 4 | 4 |

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together. An SSB group index is an SSB group consisting of K = M SSBs.

The procedures of using RIS to assist UE in network synchronization and access are as follows.

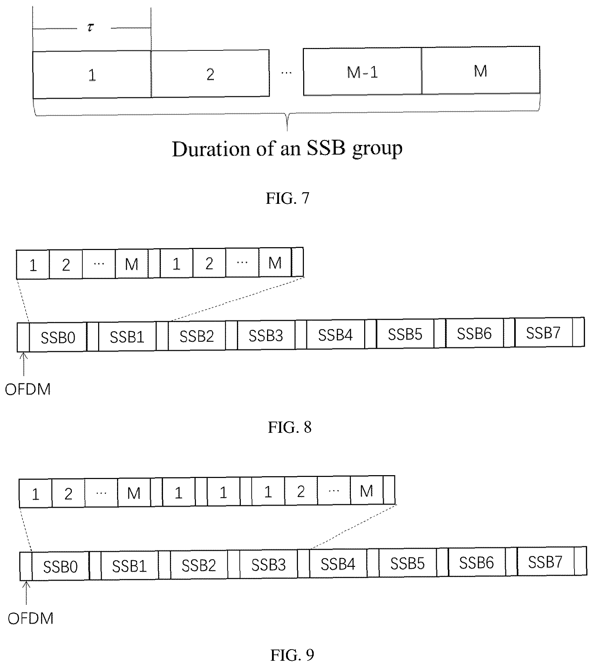

Synchronization procedure: the network device performs SSB scanning with a period of $T_0$, and the duration of each SSB group is $M\tau$. During the duration, M SSBs are transmitted, and the duration of each SSB is $\tau$. The format is shown in FIG. 7.

The specific steps are as follows.

Step 1: it is determined whether a current SSB group index is a SSB group index in the list (Table 1) before transmitting the SSB group.

Step 2: in case that the current SSB group index is the list SSB group index (such as SSB 1), the base station transmits the SSB group and periodically switches the states of RIS (SSB 1 corresponds to RIS 3). The duration of each RIS state is $\tau$, and a total of M states (phase shift matrices) are switched during the duration of SSB 1; in case that the current SSB group index is a non-list SSB group index, the base station only transmits the SSB group.

Step 3: a UE within the coverage area of RIS 3 receives SSB information (PSS, SSS, PBCH) forwarded from RIS 3, performs cell search, performs time and frequency synchronization, and obtains the minimum system information required for access.

In an embodiment, the UE assumes that the receiving occasion of PBCH, PSS, and SSS is within the consecutive symbols defined in FIG. 2, and the SSB group shown in FIG. 7 is formed. The UE assumes that the receiving occasion of N (N = 8) SSB groups is in the consecutive transmission symbols shown in FIG. 8. The UE assumes that SSS, PBCH demodulation reference signal (DMRS), and PBCH data have the same energy per resource element (EPRE). The UE may assume that the ratio of PSS EPRE to SSS EPRE in the SS/PBCH block is 0 dB or 3 dB. If dedicated higher layer parameters have not been provided to the UE, the UE may assume that, in case that the UE detects physical downlink control channel (PDCCH) in downlink control information (DCI) format 1_0 with cyclic redundancy check (CRC) scrambling using system information radio network temporary identifier (SI-RNTI), paging RNTI (P-RNTI), or random access RNTI (RA-RNTI), the ratio of PDCCH DMRS EPRE to SSS EPRE is within -8 dB and 8 dB.

Step 3: step 1- step 3 are repeated to scan the entire cell (all SSB group indexes).

Access procedure: the network device controls RIS to perform periodic state switch, with a switching period of t. Due to the fixed position of RIS and the base station, the beam from base station to RIS is determined, and the state of RIS is controlled by and known to the base station. In case that the access request signal initiated by the UE is received by the base station, the base station determines the beam of the base station and the state of RIS.

The switching period of RIS in this stage may be equal to or different from the switching period of step 2 in the synchronization procedure.

The specific steps are as follows.

Step 1: the UE transmits an access request.

Step 2: in case that the network device receives the access request from the UE, the network device maintains the current RIS state and transmits an access request response to the RIS.

Step 3: the UE receives the access request response and starts data communication with the network device through RIS.

II. Scanning list SSB group index separately from non-list SSB group index

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes of the base station covering RIS are shown in Table 1.

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together.

The procedures of using RIS to assist UE in network synchronization and access are as follows.

Synchronization procedure: the network device performs SSB scanning based on a certain rule.

The network device performs non-list SSB group index scanning with a period of $T_1$, with each SSB group having a duration of $\tau$ (each SSB having a duration of $\tau$ ). During the duration, in each SSB group, K = 1 SSB is transmitted.

The network device performs list SSB group index scanning with a period of $T_2$, with each SSB group having a duration of $M\tau$. Within this duration, in each SSB group, K = M SSBs are transmitted, in the format shown in FIG. 7.

The transmitting interval of all SSB group indexes (including list SSB group indexes and non-list SSB group indexes) is consistent, with a time interval of T between every 2 SSB group indexes transmitted.

The non-list SSB group index scanning is consistent with the related art. The difference lies in list SSB group index scanning. The list SSB group index scanning includes the following steps.

Step 1: the base station transmits the list SSB group index (such as SSB1) and periodically switches the state of RIS 3 (SSB 1 corresponds to RIS 3). The duration of each RIS state is $\tau$, and a total of M states (phase shift matrices) are switched during the duration of SSB 1.

Step 2: the UE within the coverage area of RIS 3 receives SSB information (PSS, SSS, PBCH) forwarded from RIS 3, performs cell search, performs time and frequency synchronization, and obtains the minimum system information required for access.

In an embodiment, the UE assumes that the receiving occasion of PBCH, PSS, and SSS is within the consecutive symbols defined in FIG. 2, and forms an SSB group. The UE assumes that the receiving occasion of N (N = 8) SSB groups is in the consecutive transmission symbols shown in FIG. 9. The UE assumes that SSS, PBCH DMRS, and PBCH data have the same EPRE. The UE may assume that the ratio of PSS EPRE to SSS EPRE in the SS/PBCH block is 0 dB or 3 dB. If dedicated higher layer parameters have not been provided to the UE, the UE may assume that, in case that the UE detects PDCCH in DCI format 1_0 with CRC scrambling using SI-RNTI, P-RNTI, or RA-RNTI, the ratio of PDCCH DMRS EPRE to SSS EPRE is within -8 dB and 8 dB.

Step 3: step 1- step 3 are repeated to scan all RISs (all list SSB group indexes).

Access procedure: the network device controls RIS to perform periodic state switch, with a switching period of t. Due to the fixed position of RIS and the base station, the beam from base station to RIS is determined, and the state of RIS is controlled by and known to the base station. In case that the access request signal initiated by the UE is received by the base station, the base station determines the beam of the base station and the state of RIS.

The switching period of RIS in this stage may be equal to or different from the switching period in step 2 in the synchronization procedure.

The specific steps are as follows.

Step 1: the UE transmits an access request.

Step 2: in case that the network device receives the access request from the UE, the network device maintains the current RIS state and transmits an access request response to the RIS.

Step 3: the UE receives the access request response and starts data communication with the network device through RIS.

III. The SSBs within the SSB group being non-consecutive

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes of the base station covering RIS are shown in Table 1.

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together.

Each non-list SSB group includes K = 1 SSB.

Each RIS state corresponds to one SSB, and each list SSB group includes K = M SSBs, with each SSB having a duration of $\tau$.

The procedures of using RIS to assist UE in network synchronization and access are as follows.

Synchronization procedure: the network device performs SSB scanning based on a certain rule, with separate scanning for list SSBs and non-list SSBs.

The network device performs non-list SSB group index scanning with a period of $T_1$.

The network device performs list SSB group index scanning with a period of $T_2$, a scanning unit of SSB, and a scanning duration of $\tau$. During the scanning procedure, adjacent SSBs are SSBs from different SSB groups, meaning that different RIS scans one state at a time and the network device transmits one SSB.

An identifier is assigned to each SSB, which is referred to as a block index, and the corresponding relationship between RIS index, SSB group index, and block index is shown in Table 2.

Table 1 Correspondence between RIS index, SSB group index, and block index

| RIS index | SSB group index | Block index |
| --- | --- | --- |
| 1 | 5 | 1, 2, $\cdots$, $M$ - 1, $M$ |
| 2 | 7 | 1, 2, $\cdots$, $M$ - 1, $M$ |
| 3 | 1 | 1, 2, $\cdots$, $M$ - 1, $M$ |
| 4 | 4 | 1, 2, $\cdots$, $M$ - 1, $M$ |

The scanning procedure for the list SSB group is as follows.

Step 1: the base station transmits an SSB (such as block 1) from the list SSB group (such as SSB 1) and switches RIS 3 (SSB 1 corresponds to RIS 3) to a corresponding state. The duration of each RIS state is $\tau$.

Step 2: step 1 and step 2 are repeated and all SSBs included in the SSB groups are scanned in the following order: {SSB 1,block 1}->{SSB 4,block 1}->{SSB 5,block 1}->{SSB 7,block 1}->{SSB 1,block 2}->{SSB 4,block 2}->{SSB 5,block 2}->{SSB 7,block 2}->...->{SSB 7,block M}.

Non-list SSBs include: SSB 0, SSB 2, SSB 3 SSB 6.

Non-list scanning: SSB 0->SSB 2->SSB 3->SSB 6.

Step 3: the UEs in different SSB groups or RIS coverage areas receive SSB information (PSS, SSS, PBCH) in the transmission time of each SSB group, perform cell search, perform time and frequency synchronization, and obtain the minimum system information required for access.

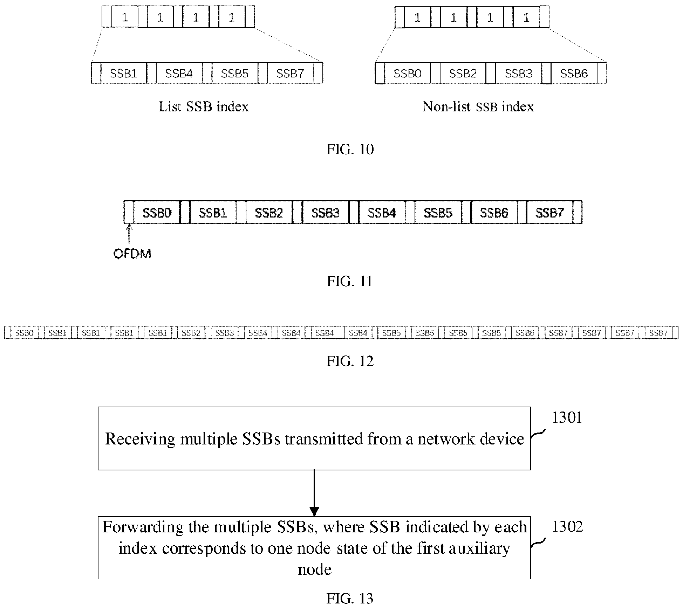

In an embodiment, the UE assumes that the receiving occasion of PBCH, PSS, and SSS is within the consecutive symbols defined in FIG. 2, and forms an SSB group. The UE assumes that the receiving occasion of N (N = 8) SSB groups is in the consecutive transmission symbols shown in FIG. 10, and the list SSB group only includes one SSB per receiving occasion. The UE assumes that SSS, PBCH DMRS, and PBCH data have the same EPRE. The UE may assume that the ratio of PSS EPRE to SSS EPRE in the SS/PBCH block is 0 dB or 3 dB. If dedicated higher layer parameters have not been provided to the UE, the UE may assume that, in case that the UE detects PDCCH in DCI format 1_0 with CRC scrambling using SI-RNTI, P-RNTI, or RA-RNTI, the ratio of PDCCH DMRS EPRE to SSS EPRE is within -8 dB and 8 dB.

IV. The SSBs within the SSB group being non-consecutive, and all SSB groups scanned together

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes of the base station covering RIS are shown in Table 1.

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together.

Each non-list SSB group includes K = 1 SSB.

Each RIS state corresponds to one SSB, and each list SSB group includes K = M SSBs, with each SSB having a duration of $\tau$.

The procedures of using RIS to assist UE in network synchronization and access are as follows.

Synchronization procedure: the network device performs SSB scanning with a period of $T$, a scanning unit of SSB, and a scanning duration of $\tau$.

An identifier is assigned to each SSB, which is referred to as a block index, and the corresponding relationship between RIS index, SSB group index, and block index is shown in Table 3.

Table 2 Correspondence between RIS index, SSB group index, and block index

| RIS index | SSB group index | Block index |
|-----------|-----------------|-------------|
| 1 | 5 | $1, 2, \cdots, M - 1, M$ |
| 2 | 7 | $1, 2, \cdots, M - 1, M$ |
| 3 | 1 | $1, 2, \cdots, M - 1, M$ |
| 4 | 4 | $1, 2, \cdots, M - 1, M$ |

The SSB scanning procedure is as follows.

Step 1: the base station transmits different SSBs at different times based on a predefined scanning sequence, and determines whether to switch RIS to a corresponding state based on the information in Table 3. The predefined scanning sequence for SSB is as follows:

SSB 0->{SSB 1,block 1}-> SSB 2-> SSB 3->{SSB 4,block 1}->{SSB 5,block 1}-> SSB 6->{SSB 7,block 1}->{SSB 1,block 2}->{SSB 4,block 2}->{SSB 5,block 2}->{SSB 7,block 2}->...->{SSB 7,block M}.

Step 2: the UE receives SSB information, performs time and frequency synchronization, and obtains the minimum system information required for access.

V. RIS timed switching scheme

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes of the base station covering RIS are shown in Table 1.

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together.

Each non-list SSB group includes K = 1 SSB.

Each RIS state corresponds to one SSB, and each list SSB group includes K = M SSBs, with each SSB having a duration of $\tau$.

For any SSB scanning, the transmission timing of each SSB in each SSB group is known and periodically fixed. The transmission timing table of all SSBs may be stored in a RIS controller, and each SSB index corresponds to a RIS state. The RIS controller is automatically triggered to switch states each time an SSB scanning is performed.

In an embodiment, the scanning sequence of SSB is as follows:

SSB 0->{SSB 1,block 1}-> SSB 2-> SSB 3->{SSB 4,block 1}->{SSB 5,block 1}-> SSB 6->{SSB 7,block 1}->{SSB 1,block 2}->{SSB 4,block 2}->{SSB 5,block 2}->{SSB 7,block 2}->...->{SSB 7,block M}.

The RIS state switching sequence corresponding to the SSB mentioned above is:

$$\psi_1 \text{->} \psi_2 \text{->} \ldots \text{->} \psi_i \text{->} \ldots \text{->} \psi_A$$

where $A = 4*M + 4$ represents the number of all SSBs, $i = 1, \cdots 4*M + 4$.

Step 0: periodic time synchronization calibration is performed between the base station and RIS, and subsequent steps are carried out under the premise of time synchronization between the base station and RIS.

Step 1: the base station transmits SSB 0, and RIS automatically switches to state $\psi_1$.

Step 2: UE within the coverage area of SSB 0 receives SSB information and performs synchronization.

Step 3: the base station transmits block 1 of SSB 1, and RIS automatically switches to state $\psi_2$.

Step 4: UE within the coverage area of RIS with state $\psi_2$ receives SSB information and performs synchronization.

Step5: each SSB is scanned based on the SSB scanning sequence, step 1 - step 2 or step 2 - step 3 are repeated until all SSBs have been scanned.

VI. Scheme for RIS switch

The base station performs periodic SSB scanning to cover the service area of the cell, and RIS forwards SSB signals to users in blind spots or at the edge of the cell. It is assumed that the network device uses N (e.g., N = 8) SSB groups to cover the service area of the cell, and there are L (e.g., L = 4) RISs in the cell, located in different blind spots or cell edge positions. The SSB group indexes of the base station covering RIS are shown in Table 1.

The information shown in Table 1 is known to the network device.

The SSB group index included in Table 1 is defined as a list SSB group index, and the SSB group index not included in Table 1 is defined as a non-list SSB group index.

RIS may switch within M different states (phase shift matrices), with each state covering a portion of the blind spot (or cell edge), and M states covering all areas of the blind spot (or cell edge) together.

Each non-list SSB group includes K = 1 SSB.

Each RIS state corresponds to one SSB, and each list SSB group includes K = M SSBs, with each SSB having a duration of $\tau$.

For any SSB scanning, the transmission timing of each SSB in each SSB group is known and periodically fixed. The transmission timing table of all SSBs may be stored in a RIS controller, and each SSB index corresponds to a RIS state. The RIS controller is automatically triggered by the base station to switch states based on a sequence each time an SSB scanning is performed.

In an embodiment, the scanning sequence of SSB is as follows:

SSB 0->{SSB 1,block 1}-> SSB 2-> SSB 3->{SSB 4,block 1}->{SSB 5,block 1}-> SSB 6->{SSB 7,block 1}->{SSB 1,block 2}->{SSB 4,block 2}->{SSB 5,block 2}->{SSB 7,block 2}->...-> {SSB 7,block M}.

The RIS state switching sequence corresponding to the SSB mentioned above is:

$$\psi_1 \text{->} \psi_2 \text{->}\ldots\text{->} \psi_i \text{->}\ldots\text{->} \psi_A$$

where $A=4*M+4$ represents the number of all SSBs, $i=1,\cdots 4*M + 4$.

Step 1: the base station transmits SSB 0 and triggers the RIS controller to automatically switch the RIS state to $\psi_1$.

Step 2: UE within the coverage area of SSB 0 receives SSB information and performs synchronization.

Step 3: the base station transmits block 1 of SSB 1, and RIS automatically switches to state $\psi_2$.

Step 4: UE within the coverage area of RIS with state $\psi_2$ receives SSB information and performs synchronization.

Step5: each SSB is scanned based on the scanning sequence, step 1 - step 2 or step 2 - step 3 are repeated until all SSBs have been scanned.

VII. Random access procedure

After any of the above synchronization procedures, a 4-step random access scheme may be used for random access.

Access procedure: the network device controls RIS to perform periodic state switch, with a switching period of t. Due to the fixed position of RIS and the base station, the beam from base station to RIS is determined, and the state of RIS is controlled by and known to the base station. In case that the access request signal initiated by the UE is received by the base station, the base station determines the beam of the base station and the state of RIS.

The switching period of RIS in this stage may be equal to or different from the switching period of step 2 in the synchronization procedure.

The specific steps are as follows.

Step 1: UE transmits an access request.

Step 2: in case of receiving the UE access request, the network device maintains the current RIS state and repeatedly transmits a random access response (Msg2) in PDCCH/PDCSH.

Step 3: the UE receives Msg2 and transmits Msg3 in PUSCH.

Step 4: the network device receives Msg3 and transmits a contention resolution message (Msg4) in PDSCH, and the Msg4 is reflected/transmitted through RIS to the UE.

VIII. Scheme one for special SSB index identifier

The base station performs periodic SSB scanning to cover the service area of the cell, and RIS forwards SSB signals to users in blind spots or at the edge of the cell. It is assumed that there are L = 4 RISs in the cell, located in different blind spots or at the edge of the cell, and each RIS uses 4 beams to cover the coverage area. The network device uses N = 8 SSB groups to cover the service area of the cell, including 4 ordinary SSBs and 4 special SSBs, which are identified as RIS SSBs as shown in Table 4.

Table 3 SSB burst sets

| SSB index | SSB special identifier |
|-----------|------------------------|
| 0 | Ordinary SSB |
| 1 | Special SSB (RIS1 SSB) |
| 2 | Ordinary SSB |
| 3 | Ordinary SSB |
| 4 | Special SSB (RIS2 SSB) |
| 5 | Special SSB (RIS3 SSB) |
| 6 | Ordinary SSB |
| 7 | Special SSB (RIS4 SSB) |

The information in the above table is known to the network device, UE, and RIS. The timing of each SSB index transmission is known to the network device, UE, and RIS. For RIS SSB, the transmission of each RIS SSB is accompanied by one RIS state switch, and in case that one RIS completes four state switches, it is called one scanning period. It is assumed that the duration of each SSB index is $\tau$, and the switching period of each ordinary SSB (the same SSB index) is $T$, then the duration of one RIS state is also $\tau$, and the switching period of each RIS SSB (the same RIS SSB index) is $4T$.

Step 1: the base station transmits the SSBs in Table 4 based on a predefined SSB occasion. Starting from SSB 0, completing a scan from SSB 0 to SSB 7 is called a cycle. Each special SSB is accompanied by a RIS state switch. It takes 4 cycles to complete the coverage area scanning of all RISs, and the specific steps are as follows.

The base station transmits SSB 0.

The base station transmits SSB 1, accompanied by RIS1 switching RIS state to $\psi_{1,1}$ based on the predefined occasion.

The base station transmits SSB 2.

The base station transmits SSB 3.

The base station transmits SSB 4, accompanied by RIS2 switching RIS state to $\psi_{2,1}$ based on the predefined occasion.

The base station transmits SSB 5, accompanied by RIS3 switching RIS state to $\psi_{3,1}$ based on the predefined occasion.

The base station transmits SSB 6.

The base station transmits SSB 7, accompanied by RIS7 switching RIS state to $\psi_{4,1}$ based on the predefined occasion.

The above 1) to 8) are repeated, and the states of RIS1 to RIS4 are switched to $\psi_{i,2}$, where i = 1, 2, 3, 4.

The above 1) to 8) are repeated, and the states of RIS1 to RIS4 are switched to $\psi_{i,\,3}$, where i = 1, 2, 3, 4.

The above 1) to 8) are repeated, and the states of RIS1 to RIS4 are switched to $\psi_{i,\,4}$, where i = 1, 2, 3, 4.

Four ordinary SSB cycles and 1 RIS SSB cycle are completed from 1) to 11).

Step 2: UE within each SSB coverage area receives SSB information at the corresponding occasion. UEs in different SSB groups or RIS coverage areas receive SSB information (PSS, SSS, PBCH), perform cell search, perform time and frequency synchronization, and obtain the minimum system information required for access.

In an embodiment, the UE assumes that the receiving occasion of PBCH, PSS, and SSS is within the consecutive symbols defined in FIG. 2, and forms an SSB. The UE assumes that the receiving occasion of N (N = 8) SSB indexes is in the consecutive transmission symbols as shown in FIG. 11. The UE assumes that SSS, PBCH DMRS, and PBCH data have the same EPRE. The UE may assume that the ratio of PSS EPRE to SSS EPRE in the SS/PBCH block is 0 dB or 3 dB. If dedicated higher layer parameters have not been provided to the UE, the UE may assume that, in case that the UE detects PDCCH in DCI format 1_0 with CRC scrambling using SI-RNTI, P-RNTI, or RA-RNTI, the ratio of PDCCH DMRS EPRE to SSS EPRE is within -8 dB and 8 dB.

IX. Scheme two for special SSB index identifier

The base station performs periodic SSB scanning to cover the service area of the cell, and RIS forwards SSB signals to users in blind spots or at the edge of the cell. It is assumed that there are L = 4 RISs in the cell, located in different blind spots or at the edge of the cell, and each RIS uses 4 beams to cover the coverage area. The network device uses N = 8 SSB groups to cover the service area of the cell, including 4 ordinary SSBs and 4 special SSBs, which are identified as RIS SSBs as shown in Table 4.

The information in Table 4 is known to the network device, UE, and RIS. The timing of each SSB index transmission is known to the network device, UE, and RIS. For RIS SSB, the transmission of each RIS SSB is accompanied by one RIS state switch, and in case that one RIS completes four state switches, it is called one scanning period. It is assumed that the duration of each SSB index is $\tau$, the switching period of each SSB (the same SSB index) is $T$, and the duration of each RIS state is also $\tau$.

Step 1: the base station transmits the SSBs in Table 4 based on a predefined SSB occasion. Starting from SSB 0, completing a scan from SSB 0 to SSB 7 is called a cycle. Each special SSB index is transmitted 4 times, and each time a special SSB index is transmitted, it is accompanied by a corresponding RIS state switch.

The specific steps are as follows.

1) The base station transmits SSB 0.
2) The base station continuously transmits SSB 1 for 4 times, accompanied by RIS1 switching RIS state to $\psi_{1,1}, \psi_{1,2}, \psi_{1,3}, \psi_{1,4}$ sequentially based on the predefined occasion.
3) The base station transmits SSB 2.
4) The base station transmits SSB 3.
5) The base station continuously transmits SSB 4 for 4 times, accompanied by RIS1 switching RIS state to $\psi_{2,1}, \psi_{2,2}, \psi_{2,3}, \psi_{2,4}$ sequentially based on the predefined occasion.
6) The base station continuously transmits SSB 5 for 4 times, accompanied by RIS1 switching RIS state to $\psi_{3,1}, \psi_{3,2}, \psi_{3,3}, \psi_{3,4}$ sequentially based on the predefined occasion.
7) The base station transmits SSB 6.
8) The base station continuously transmits SSB 7 for 4 times, accompanied by RIS1 switching RIS state to $\psi_{4,1}, \psi_{4,2}, \psi_{4,3}, \psi_{4,4}$ sequentially based on the predefined occasion.

Step 2: UE within each SSB coverage area receives SSB information at the corresponding occasion. UEs in different SSB groups or RIS coverage areas receive SSB information (PSS, SSS, PBCH), perform cell search, perform time and frequency synchronization, and obtain the minimum system information required for access.

In an embodiment, the UE assumes that the receiving occasion of PBCH, PSS, and SSS is within the consecutive symbols defined in FIG. 2, and forms an SSB. The UE assumes that the receiving occasion of N (N = 8) SSB indexes is in the consecutive transmission symbols as shown in FIG. 12. The UE assumes that SSS, PBCH DMRS, and PBCH data have the same EPRE. The UE may assume that the ratio of PSS EPRE to SSS EPRE in the SS/PBCH block is 0 dB or 3 dB. If dedicated higher layer parameters have not been provided to the UE, the UE may assume that, in case that the UE detects PDCCH in DCI format 1_0 with CRC scrambling using SI-RNTI, P-RNTI, or RA-RNTI, the ratio of PDCCH DMRS EPRE to SSS EPRE is within -8 dB and 8 dB.

FIG. 13 is a second schematic flowchart of a synchronization signal block (SSB) transmission method according to an embodiment of the present application. As shown in FIG. 13, the SSB transmission method provided in the embodiments of the present application is performed by a first auxiliary node, such as a reconfigurable intelligent meta-surface (RIS). The method includes:

receiving multiple SSBs transmitted from a network device; and
forwarding the multiple SSBs, where SSB indicated by each index corresponds to one node state of the first auxiliary node.

In some embodiments, before forwarding the multiple SSBs, the method further includes:
receiving multiple pieces of first node state indication information transmitted from the network device, where the first node state indication information is used to indicate a node state used by the first auxiliary node in case of forwarding SSB.

In some embodiments, forwarding the multiple SSBs includes:

obtaining a trigger message transmitted from the network device; and
forwarding the multiple SSBs in multiple different given time periods respectively, where indexes of one or more SSBs forwarded in each given time period are the same.

In some embodiments, before forwarding the multiple SSBs, the method further includes:
synchronizing with the network device.

In some embodiments, forwarding the multiple SSBs includes:
forwarding the multiple SSBs in multiple different given time periods respectively, where indexes of one or more SSBs forwarded in each given time period are the same.

In some embodiments, indexes of SSBs transmitted in different given time periods are different.

In some embodiments, indexes of SSBs transmitted in different given time periods are the same.

In some embodiments, during a duration of transmitting an SSB with target index, receiving an access request message transmitted from a terminal, where the SSB with target index includes one or more SSBs with the same index among multiple SSBs transmitted from the network device;

forwarding the access request message to the network device;

receiving an access response message transmitted from the network device; and

forwarding the access response message to the terminal using a target node state, where the target node state is a node state used by the first auxiliary node in case of transmitting the SSB with target index.

The SSB transmission method provided in the embodiments of the present application may refer to the SSB transmission method embodiment performed by a terminal, and may achieve the same technical effect. The same parts and beneficial effects as the corresponding method embodiments in this embodiment are not repeated.

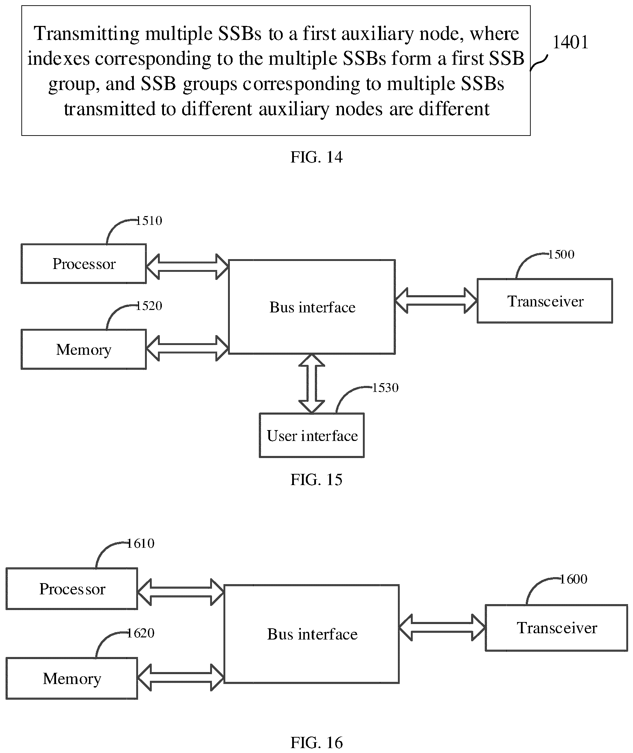

FIG. 14 is a third schematic flowchart of a synchronization signal block (SSB) transmission method according to an embodiment of the present application. As shown in FIG. 14, the SSB transmission method provided in the embodiments of the present application is performed by a network device, such as a base station. The method includes: transmitting multiple SSBs to a first auxiliary node, where indexes corresponding to the multiple SSBs form a first SSB group, and the SSB groups corresponding to multiple SSBs transmitted by the network device to different auxiliary nodes are different.

In some embodiments, before transmitting the multiple SSBs to the first auxiliary node, the method further includes:

transmitting multiple pieces of first node state indication information to the first auxiliary node, where the first node state indication information is used to indicate a node state used by the first auxiliary node in case of forwarding SSB.

In some embodiments, before transmitting the multiple SSBs to the first auxiliary node, the method further includes:

synchronizing with the first auxiliary node.

In some embodiments, transmitting the multiple SSBs to the first auxiliary node includes:

transmitting the multiple SSBs to the first auxiliary node in multiple different given time periods respectively, where indexes of one or more SSBs transmitted in each given time period are the same.

In some embodiments, transmitting the multiple SSBs to the first auxiliary node includes:

transmitting a trigger message to the first auxiliary node; and

transmitting the multiple SSBs in multiple different given time periods respectively, where indexes of one or more SSBs transmitted in each given time period are the same.

In some embodiments, the different given time periods are consecutive.

In some embodiments, the different given time periods are at intervals.

In some embodiments, during a duration of transmitting an SSB with target index to the first auxiliary node, receiving an access request message forwarded from the first auxiliary node; and

transmitting an access response message and second node state indication information to the first auxiliary node, where the second node state indication information is used to indicate the first auxiliary node to forward the access response message to the terminal using a target node state, and the target node state is a node state used by the first auxiliary node in case of forwarding the SSB with target index.

The SSB transmission method provided in the embodiments of the present application may refer to the SSB transmission method embodiment performed by a terminal, and may achieve the same technical effect. The same parts and beneficial effects as the corresponding method embodiments in this embodiment are not repeated.

FIG. 15 is a schematic structural diagram of a terminal according to an embodiment of the present application. As shown in FIG. 15, the terminal includes a memory 1520, a transceiver 1500, and a processor 1510, where:

the memory 1520 is used for storing a computer program; the transceiver 1500 is used for transmitting and receiving data under control of the processor 1510; and the processor 1510 is used for reading the computer program in the memory 1520 and performing the following operations:

receiving a synchronization signal block (SSB) with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

In an embodiment, the transceiver 1500 is used for transmitting and receiving data under control of the processor 1510.

In FIG. 15, a bus architecture may include any number of interconnected buses and bridges, which are linked together through various circuits of one or more processors represented by the processor 1510 and one or more memories represented by the memory 1520. The bus architecture may also link together various other circuits, such as peripherals, voltage regulators, and power management circuits, etc., which are well known in the art, and therefore are not further described in the present application. The bus interface provides an interface. The transceiver 1500 may include multiple elements, i.e., including a transmitter and a receiver, units for providing communication with various other devices over transmission media including wireless channels, wired channels, fiber optic cables, and the like. For different user devices, the user interface 1530 may also be an interface that may connect external and internal devices, including but not limited to keypads, displays, speakers, microphones, joysticks, etc.

The processor 1510 is responsible for managing the bus architecture and general processing, and the memory 1520 may store data used by the processor 1510 when performing operations.

In some embodiments, the processor 1510 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods performed by the terminal provided in the embodiments of the present application based on the obtained executable instructions. The processor and the memory may also be arranged physically separately.

In some embodiments, after receiving the SSB with target index forwarded from the first auxiliary node, the operations further include:

transmitting an access request message; and

receiving an access response message forwarded from the first auxiliary node using a target node state, where the target node state is a node state used by the first auxiliary node in case of transmitting the SSB with target index.

In some embodiments, the multiple SSBs forwarded from the first auxiliary node include SSBs transmitted in multiple different given time periods, and indexes of one or more SSBs transmitted in each given time period are the same.

In some embodiments, indexes of SSBs transmitted in different given time periods are different.

In some embodiments, indexes of SSBs transmitted in different given time periods are the same.

It should be noted that the terminal provided in the embodiments of the present application may implement all the method steps implemented by the method embodiment performed by a terminal, and may achieve the same technical effects. The same parts and beneficial effects as the method embodiment in this embodiment are not repeated.

FIG. 16 is a schematic structural diagram of a first auxiliary node according to an embodiment of the present application. As shown in FIG. 16, the network device includes a memory 1620, a transceiver 1600, and a processor 1610, where:

the memory 1620 is used for storing a computer program; the transceiver 1600 is used for transmitting and receiving data under control of the processor 1610; and the processor 1610 is used for reading the computer program in the memory 1620 and performing the following operations:

receiving multiple synchronization signal blocks (SSBs) transmitted from a network device; and

forwarding the multiple SSBs, where SSB indicated by each index corresponds to one node state of the first auxiliary node.

In an embodiment, the transceiver 1600 is used for transmitting and receiving data under control of the processor 1610.

In FIG. 16, a bus architecture may include any number of interconnected buses and bridges, which are linked together through various circuits of one or more processors represented by the processor 1610 and one or more memories represented by the memory 1620. The bus architecture may also link various other circuits such as peripheral devices, voltage regulators, and power management circuits together, which are well-known in the art, and therefore are not further described in the present application. The bus interface provides an interface. The transceiver 1600 may include multiple elements, i.e., including a transmitter and a receiver, units for providing communication with various other devices over transmission media including wireless channels, wired channels, fiber optic cables, and the like. The processor 1610 is responsible for managing the bus architecture and general processing, and the memory 1620 may store data used by the processor 1610 when performing operations.

The processor 1610 may be a central processing unit (CPU), an application specific integrated circuit (ASIC), a field-programmable gate array (FPGA), or a complex programmable logic device (CPLD), the processor may also use a multi-core architecture.

In some embodiments, before forwarding the multiple SSBs, the operations further include:
receiving multiple pieces of first node state indication information transmitted from the network device, where the first node state indication information is used to indicate a node state used by the first auxiliary node in case of forwarding SSB.

In some embodiments, forwarding the multiple SSBs includes:

obtaining a trigger message transmitted from the network device; and
forwarding the multiple SSBs in multiple different given time periods, where indexes of one or more SSBs forwarded in each given time period are the same.

In some embodiments, before forwarding the multiple SSBs, the operations further include:
synchronizing with the network device.

In some embodiments, forwarding the multiple SSBs includes:
forwarding the multiple SSBs in multiple different given time periods, where indexes of one or more SSBs forwarded in each given time period are the same.

In some embodiments, indexes of SSBs transmitted in different given time periods are different.

In some embodiments, indexes of SSBs transmitted in different given time periods are the same.

In some embodiments, during a duration of transmitting an SSB with target index, receiving an access request message transmitted from a terminal, where the SSB with target index includes one or more SSBs with the same index among multiple SSBs transmitted from the network device;

forwarding the access request message to the network device;
receiving an access response message transmitted from the network device; and
forwarding the access response message to the terminal using a target node state, where the target node state is a node state used in case of transmitting the SSB with target index.

In an embodiment, the first auxiliary node provided in the embodiments of the present application may achieve all method steps implemented by the method embodiment performed by a first auxiliary node, and may achieve the same technical effect. The same parts and beneficial effects as the method embodiment in this embodiment are not repeated.

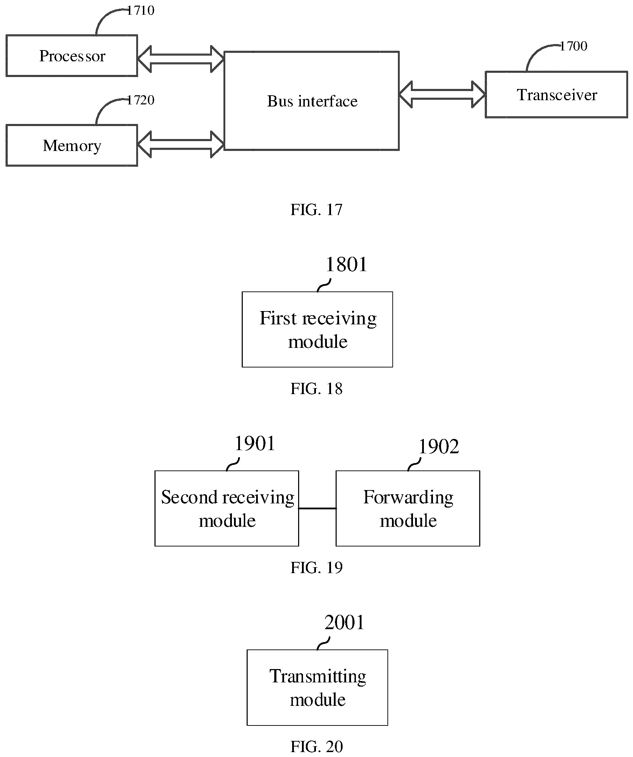

FIG. 17 is a schematic structural diagram of a network device according to an embodiment of the present application. As shown in FIG. 17, the network device includes a memory 1720, a transceiver 1700, and a processor 1710, where:
the memory 1720 is used for storing a computer program; the transceiver 1700 is used for transmitting and receiving data under control of the processor 1710; and the processor 1710 is used for reading the computer program in the memory 1720 and performing the following operations:
transmitting multiple synchronization signal blocks (SSBs) to a first auxiliary node, where indexes corresponding to the multiple SSBs form a first SSB group, and SSB groups corresponding to multiple SSBs transmitted by the network device to different auxiliary nodes are different.

In an embodiment, the transceiver 1700 is used for transmitting and receiving data under control of the processor 1710.

In FIG. 17, a bus architecture may include any number of interconnected buses and bridges, which are linked together through various circuits of one or more processors represented by the processor 1710 and one or more memories represented by the memory 1720. The bus architecture may also link various other circuits such as peripheral devices, voltage regulators, and power management circuits together, which are well-known in the art, and therefore are not further described in the present application. The bus interface provides an interface. The transceiver 1700 may include multiple elements, i.e., including a transmitter and a receiver, units for providing communication with various other devices over transmission media including wireless channels, wired channels, fiber optic cables, and the like. The processor 1710 is responsible for managing the bus architecture and general processing, and the memory 1720 may store data used by the processor 1710 when performing operations.

The processor 1710 may be a central processing unit (CPU), an application specific integrated circuit (ASIC), a field-programmable gate array (FPGA), or a complex programmable logic device (CPLD), the processor may also use a multi-core architecture.

In some embodiments, before transmitting the multiple SSBs to the first auxiliary node, the operations further include:
transmitting multiple pieces of first node state indication information to the first auxiliary node, where the first node state indication information is used to indicate a node state used by the first auxiliary node in case of forwarding SSB.

In some embodiments, before transmitting the multiple SSBs to the first auxiliary node, the operations further include:
synchronizing with the first auxiliary node.

In some embodiments, transmitting the multiple SSBs to the first auxiliary node includes:
transmitting the multiple SSBs to the first auxiliary node in multiple different given time periods, where indexes of one or more SSBs transmitted in each given time period are the same.

In some embodiments, transmitting the multiple SSBs to the first auxiliary node includes:

transmitting a trigger message to the first auxiliary node; and
transmitting the multiple SSBs in multiple different given time periods, where indexes of one or more SSBs transmitted in each given time period are the same.

In some embodiments, the different given time periods are consecutive.

In some embodiments, the different given time periods are at intervals.

In some embodiments, during a duration of transmitting an SSB with target index to the first auxiliary node, receiving an access request message forwarded from the first auxiliary node; and
transmitting an access response message and second node state indication information to the first auxiliary node, where the second node state indication information is used to indicate the first auxiliary node to forward the access response message to a terminal using a target node state, and the target node state is a node state used by the first auxiliary node in case of forwarding the SSB with target index.

In an embodiment, the above-mentioned network device provided in the embodiments of the present application may achieve all the method steps implemented by the method embodiment performed by a network device, and may achieve the same technical effects. The same parts and beneficial effects as the method embodiment in this embodiment are not repeated.

FIG. 18 is first schematic structural diagram of a synchronization signal block (SSB) transmission apparatus according to an embodiment of the present application. As shown in FIG. 18, the SSB transmission apparatus provided in the embodiments of the present application includes a first receiving module 1801, where:
the first receiving module 1801 is used for receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node.

In some embodiments, the apparatus further includes a second transmitting module and a third receiving module;

the second transmitting module is used for transmitting an access request message; and

the third receiving module is used for receiving an access response message forwarded from the first auxiliary node using a target node state, where the target node state is a node state used by the first auxiliary node in case of transmitting the SSB with target index.

In some embodiments, the multiple SSBs forwarded from the first auxiliary node include SSBs transmitted in multiple different given time periods, and indexes of one or more SSBs transmitted in each given time period are the same.

In some embodiments, indexes of SSBs transmitted in different given time periods are different.

In some embodiments, indexes of SSBs transmitted in different given time periods are the same.

In an embodiment, the SSB transmission apparatus provided in the embodiments of the present application may achieve all method steps implemented by the method embodiment performed by a terminal, and may achieve the same technical effects. The same parts and beneficial effects as the method embodiment in this embodiment are not repeated.

FIG. 19 is a second schematic structural diagram of a synchronization signal block (SSB) transmission apparatus according to an embodiment of the present application. As shown in FIG. 19, the SSB transmission apparatus provided in the embodiments of the present application includes a second receiving module 1901 and a first forwarding module 1902, where:
the second receiving module 1901 is used for receiving multiple SSBs transmitted from a network device; the first forwarding module 1902 is used for forwarding the multiple SSBs, where SSB indicated by each index corresponds to one node state.

In some embodiments, the apparatus further includes a fourth receiving module;
the fourth receiving module is used for receiving multiple pieces of first node state indication information transmitted from the network device, where the first node state indication information is used to indicate a node state used by the first auxiliary node in case of forwarding SSB.

In some embodiments, the first forwarding module includes an obtaining unit and a forwarding unit;

the obtaining unit is used for obtaining a trigger message transmitted from the network device; and

the forwarding unit is used for forwarding the multiple SSBs in multiple different given time periods, where indexes of one or more SSBs forwarded in each given time period are the same.

In some embodiments, the apparatus further includes a first synchronizing module;
the first synchronizing module is used for synchronizing with the network device.
In some embodiments, forwarding the multiple SSBs includes:
forwarding the multiple SSBs in multiple different given time periods, where indexes of one or more SSBs forwarded in each given time period are the same.
In some embodiments, indexes of SSBs transmitted in different given time periods are different.
In some embodiments, indexes of SSBs transmitted in different given time periods are the same.
In some embodiments, the apparatus further includes a fifth receiving module, a second forwarding module, a sixth receiving module, and a third forwarding module;

during a duration of transmitting an SSB with target index, the fifth receiving module is used for receiving an access request message transmitted from a terminal, where the SSB with target index includes one or more SSBs with the same index among multiple SSBs transmitted from the network device;
the second forwarding module is used for forwarding the access request message to the network device;
the sixth receiving module is used for receiving an access response message transmitted from the network device; and
the third forwarding module is used for forwarding the access response message to the terminal using a target node state, where the target node state is a node state used in case of transmitting the SSB with target index.

The SSB transmission apparatus provided in the embodiments of the present application may achieve all the method steps implemented by the method embodiment performed by a first auxiliary node, and may achieve the same technical effect. The same parts and beneficial effects as the method embodiment in this embodiment are not repeated.
FIG. 20 is a third schematic structural diagram of a synchronization signal block (SSB) transmission apparatus according to an embodiment of the present application. As shown in FIG. 20, the SSB transmission apparatus provided in the embodiments of the present application includes a first transmitting module 2001, where:
the first transmitting module 2001 is used for transmitting multiple SSBs to a first auxiliary node, where indexes corresponding to the multiple SSBs form a first SSB group, and SSB groups corresponding to multiple SSBs transmitted to different auxiliary nodes are different.
In some embodiments, the apparatus further includes a third transmitting module;
the third transmitting module is used for transmitting multiple pieces of first node state indication information to the first auxiliary node, where the first node state indication information is used to indicate a node state used by the first auxiliary node in case of forwarding SSB.
In some embodiments, the apparatus further includes a second synchronizing module;
the second synchronizing module is used for synchronizing with the first auxiliary node.
In some embodiments, transmitting the multiple SSBs to the first auxiliary node includes:
transmitting the multiple SSBs to the first auxiliary node in multiple different given time periods, where indexes of one or more SSBs transmitted in each given time period are the same.
In some embodiments, transmitting the multiple SSBs to the first auxiliary node includes:

transmitting a trigger message to the first auxiliary node; and
transmitting the multiple SSBs in multiple different given time periods, where indexes of one or more SSBs transmitted in each given time period are the same.

In some embodiments, the multiple different given time periods are consecutive.
In some embodiments, the multiple different given time periods are at intervals.
In some embodiments, the apparatus further includes a seventh receiving module and a fourth transmitting module; during a duration of transmitting an SSB with target index to the first auxiliary node, the seventh receiving module is used for receiving an access request message forwarded from the first auxiliary node; and
the fourth transmitting module is used for transmitting an access response message and second node state indication information to the first auxiliary node, where the second node state indication information is used to indicate the first auxiliary node to forward the access response message to a terminal using a target node state, and the target node state is a node state used by the first auxiliary node in case of forwarding the SSB with target index.
The SSB transmission apparatus provided in the embodiments of the present application may achieve all method steps implemented by the method embodiment performed by a network device, and may achieve the same technical effects. The same parts and beneficial effects as the method embodiment in this embodiment are not repeated.

It should be noted that the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

In some embodiments, a computer-readable storage medium is further provided, where the computer-readable storage medium stores a computer program for causing a computer to perform any of the SSB transmission methods provided in the above method embodiments.

The computer-readable storage medium provided in the embodiments of the present application may implement all the method steps implemented in the above method embodiments and achieve the same technical effects. The same parts and beneficial effects as the method embodiments in this embodiment are not repeated.

It should be noted that the computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

Additionally, it should be noted that the terms "first", "second", etc. in the embodiment of the present application are used to distinguish similar objects and are not used to describe a specific order or sequence. It should be understood that the terms used in this way may be interchanged in appropriate circumstances, so that the embodiments disclosed herein may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions provided in embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and quantity of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1.  A synchronization signal block (SSB) transmission method, performed by a terminal, comprising:

receiving an SSB with target index forwarded from a first auxiliary node, wherein the SSB with target index comprises one or more SSBs with the same index among multiple SSBs forwarded from the first auxiliary node, and SSB indicated by each index among the multiple SSBs forwarded from the first auxiliary node corresponds to one node state of the first auxiliary node.

2. The SSB transmission method of claim 1, wherein after receiving the SSB with target index forwarded from the first auxiliary node, the method further comprises:

transmitting an access request message; and
receiving an access response message forwarded from the first auxiliary node using a target node state, wherein the target node state is a node state used by the first auxiliary node in case of transmitting the SSB with target index.

3. The SSB transmission method of claim 1, wherein the multiple SSBs forwarded from the first auxiliary node comprise SSBs transmitted in multiple different given time periods, and indexes of one or more SSBs transmitted in each given time period are the same.

4. The SSB transmission method of claim 3, wherein indexes of SSBs transmitted in different given time periods are different.

5. The SSB transmission method of claim 3, wherein indexes of SSBs transmitted in different given time periods are the same.

6. A synchronization signal block (SSB) transmission method, performed by a first auxiliary node, comprising:

receiving multiple SSBs transmitted from a network device; and
forwarding the multiple SSBs, wherein SSB indicated by each index corresponds to one node state of the first auxiliary node.

7. The SSB transmission method of claim 6, wherein before forwarding the multiple SSBs, the method further comprises: receiving multiple pieces of first node state indication information transmitted from the network device, wherein the first node state indication information is used to indicate a node state used by the first auxiliary node in case of forwarding SSB.

8. The SSB transmission method of claim 6, wherein forwarding the multiple SSBs comprises:

obtaining a trigger message transmitted from the network device; and
forwarding the multiple SSBs in multiple different given time periods, wherein indexes of one or more SSBs forwarded in each given time period are the same.

9. The SSB transmission method of claim 6, wherein before forwarding the multiple SSBs, the method further comprises: synchronizing with the network device.

10. The SSB transmission method of claim 9, wherein forwarding the multiple SSBs comprises: forwarding the multiple SSBs in multiple different given time periods, wherein indexes of one or more SSBs forwarded in each given time period are the same.

11. The SSB transmission method of claim 8 or 10, wherein indexes of SSBs transmitted in different given time periods are different.

12. The SSB transmission method of claim 8 or 10, wherein indexes of SSBs transmitted in different given time periods are the same.

13. The SSB transmission method of claim 6, wherein during a duration of transmitting an SSB with target index, receiving an access request message transmitted from a terminal, wherein the SSB with target index comprises one or more SSBs with the same index among multiple SSBs transmitted from the network device;

forwarding the access request message to the network device;

receiving an access response message transmitted from the network device; and
forwarding the access response message to the terminal using a target node state, wherein the target node state is a node state in case of transmitting the SSB with target index.

14. A synchronization signal block (SSB) transmission method, performed by a network device, comprising:
transmitting multiple SSBs to a first auxiliary node, wherein indexes corresponding to the multiple SSBs form a first SSB group, and SSB groups corresponding to multiple SSBs transmitted by the network device to different auxiliary nodes are different.

15. The SSB transmission method of claim 14, wherein before transmitting the multiple SSBs to the first auxiliary node, the method further comprises:
transmitting multiple pieces of first node state indication information to the first auxiliary node, wherein the first node state indication information is used to indicate a node state used by the first auxiliary node in case of forwarding SSB.

16. The SSB transmission method of claim 14, wherein before transmitting the multiple SSBs to the first auxiliary node, the method further comprises:
synchronizing with the first auxiliary node.

17. The SSB transmission method of claim 16, wherein transmitting the multiple SSBs to the first auxiliary node comprises:
transmitting the multiple SSBs to the first auxiliary node in multiple different given time periods, wherein indexes of one or more SSBs transmitted in each given time period are the same.

18. The SSB transmission method of claim 14, wherein transmitting the multiple SSBs to the first auxiliary node comprises:

transmitting a trigger message to the first auxiliary node; and
transmitting the multiple SSBs in multiple different given time periods, wherein indexes of one or more SSBs transmitted in each given time period are the same.

19. The SSB transmission method of claim 18, wherein the different given time periods are consecutive.

20. The SSB transmission method of claim 18, wherein the different given time periods are at intervals.

21. The SSB transmission method of claim 14, wherein during a duration of transmitting an SSB with target index to the first auxiliary node, receiving an access request message forwarded from the first auxiliary node; and
transmitting an access response message and second node state indication information to the first auxiliary node, wherein the second node state indication information is used to indicate the first auxiliary node to forward the access response message to a terminal using a target node state, and the target node state is a node state used by the first auxiliary node in case of forwarding the SSB with target index.

22. A terminal, comprising a memory, a transceiver, and a processor, wherein
the memory is used for storing a computer program; the transceiver is used for receiving and transmitting data under control of the processor; and the processor is used for reading the computer program in the memory and performing the following operations:
receiving a synchronization signal block (SSB) with target index forwarded from a first auxiliary node, wherein the SSB with target index comprises one or more SSBs with the same index among multiple SSBs forwarded from the first auxiliary node, and SSB indicated by each index among the multiple SSBs forwarded from the first auxiliary node corresponds to one node state of the first auxiliary node.

23. The terminal of claim 22, wherein after receiving the SSB with target index forwarded from the first auxiliary node, the operations further comprise:

transmitting an access request message; and
receiving an access response message forwarded from the first auxiliary node using a target node state, wherein the target node state is a node state used by the first auxiliary node in case of transmitting the SSB with target index.

24. The terminal of claim 22, wherein the multiple SSBs forwarded from the first auxiliary node comprise SSBs transmitted in multiple different given time periods, and indexes of one or more SSBs transmitted in each given time period are the same.

25. The terminal of claim 24, wherein indexes of SSBs transmitted in different given time periods are different.

26. The terminal of claim 24, wherein indexes of SSBs transmitted in different given time periods are the same.

27. A first auxiliary node, comprising a memory, a transceiver, and a processor, wherein
   the memory is used for storing a computer program; the transceiver is used for receiving and transmitting data under control of the processor; and the processor is used for reading the computer program in the memory and performing the following operations:

      receiving multiple synchronization signal blocks (SSBs) transmitted from a network device; and
      forwarding the multiple SSBs, wherein SSB indicated by each index corresponds to one node state of the first auxiliary node.

28. The first auxiliary node of claim 27, wherein before forwarding the multiple SSBs, the operations further comprise: receiving multiple pieces of first node state indication information transmitted from the network device, wherein the first node state indication information is used to indicate a node state used by the first auxiliary node in case of forwarding SSB.

29. The first auxiliary node of claim 27, wherein forwarding the multiple SSBs comprises:

      obtaining a trigger message transmitted from the network device; and
      forwarding the multiple SSBs in multiple different given time periods, wherein indexes of one or more SSBs forwarded in each given time period are the same.

30. The first auxiliary node of claim 27, wherein before forwarding the multiple SSBs, the operations further comprise: synchronizing with the network device.

31. The first auxiliary node of claim 30, wherein forwarding the multiple SSBs comprises:
   forwarding the multiple SSBs in multiple different given time periods, wherein indexes of one or more SSBs forwarded in each given time period are the same.

32. The first auxiliary node of claim 29 or 31, wherein indexes of SSBs transmitted in different given time periods are different.

33. The first auxiliary node of claim 29 or 31, wherein indexes of SSBs transmitted in different given time periods are the same.

34. The first auxiliary node of claim 27, wherein during a duration of transmitting an SSB with target index, receiving an access request message transmitted from a terminal, wherein the SSB with target index comprises one or more SSBs with the same index among multiple SSBs transmitted from the network device;

      forwarding the access request message to the network device;
      receiving an access response message transmitted from the network device; and
      forwarding the access response message to the terminal using a target node state, wherein the target node state is a node state in case of transmitting the SSB with target index.

35. A network device, comprising a memory, a transceiver, and a processor, wherein
   the memory is used for storing a computer program; the transceiver is used for receiving and transmitting data under control of the processor; and the processor is used for reading the computer program in the memory and performing the following operations:
   transmitting multiple synchronization signal blocks (SSBs) to a first auxiliary node, wherein indexes corresponding to the multiple SSBs form a first SSB group, and SSB groups corresponding to multiple SSBs transmitted by the network device to different auxiliary nodes are different.

36. The network device of claim 35, wherein before transmitting the multiple SSBs to the first auxiliary node, the operations further comprise:
transmitting multiple pieces of first node state indication information to the first auxiliary node, wherein the first node state indication information is used to indicate a node state used by the first auxiliary node in case of forwarding SSB.

37. The network device of claim 35, wherein before transmitting the multiple SSBs to the first auxiliary node, the operations further comprise:
synchronizing with the first auxiliary node.

38. The network device of claim 37, wherein transmitting the multiple SSBs to the first auxiliary node comprises:
transmitting the multiple SSBs to the first auxiliary node in multiple different given time periods, wherein indexes of one or more SSBs transmitted in each given time period are the same.

39. The network device of claim 35, wherein transmitting the multiple SSBs to the first auxiliary node comprises:

transmitting a trigger message to the first auxiliary node; and
transmitting the multiple SSBs in multiple different given time periods, wherein indexes of one or more SSBs transmitted in each given time period are the same.

40. The network device of claim 39, wherein the different given time periods are consecutive.

41. The network device of claim 39, wherein the different given time periods are at intervals.

42. The network device of claim 35, wherein during a duration of transmitting an SSB with target index to the first auxiliary node, receiving an access request message forwarded from the first auxiliary node; and
transmitting an access response message and second node state indication information to the first auxiliary node, wherein the second node state indication information is used to indicate the first auxiliary node to forward the access response message to a terminal using a target node state, and the target node state is a node state used by the first auxiliary node in case of forwarding the SSB with target index.

43. A synchronization signal block (SSB) transmission apparatus, comprising:
a first receiving module, used for receiving an SSB with target index forwarded from a first auxiliary node, wherein the SSB with target index comprises one or more SSBs with the same index among multiple SSBs forwarded from the first auxiliary node, and SSB indicated by each index among the multiple SSBs forwarded from the first auxiliary node corresponds to one node state of the first auxiliary node.

44. The SSB transmission apparatus of claim 43, wherein the apparatus further comprises a second transmitting module and a third receiving module;

the second transmitting module is used for transmitting an access request message; and
the third receiving module is used for receiving an access response message forwarded from the first auxiliary node using a target node state, wherein the target node state is a node state used by the first auxiliary node in case of transmitting the SSB with target index.

45. The SSB transmission apparatus of claim 43, wherein the multiple SSBs forwarded from the first auxiliary node comprise SSBs transmitted in multiple different given time periods, and indexes of one or more SSBs transmitted in each given time period are the same.

46. The SSB transmission apparatus of claim 45, wherein indexes of SSBs transmitted in different given time periods are different.

47. The SSB transmission apparatus of claim 45, wherein indexes of SSBs transmitted in different given time periods are the same.

48. A synchronization signal block (SSB) transmission apparatus, comprising:

a second receiving module, used for receiving multiple SSBs transmitted from a network device; and
a first forwarding module, used for forwarding the multiple SSBs, wherein SSB indicated by each index corresponds to one node state.

49. The SSB transmission apparatus of claim 48, wherein the apparatus further comprises a fourth receiving module; the fourth receiving module is used for receiving multiple pieces of first node state indication information transmitted from the network device, wherein the first node state indication information is used to indicate a node state used by a first auxiliary node in case of forwarding SSB.

50. The SSB transmission apparatus of claim 48, wherein the first forwarding module comprises an obtaining unit and a forwarding unit;

the obtaining unit is used for obtaining a trigger message transmitted from the network device; and
the forwarding unit is used for forwarding the multiple SSBs in multiple different given time periods, wherein indexes of one or more SSBs forwarded in each given time period are the same.

51. The SSB transmission apparatus of claim 48, wherein the apparatus further comprises a first synchronizing module; the first synchronizing module is used for synchronizing with the network device.

52. The SSB transmission apparatus of claim 51, wherein forwarding the multiple SSBs comprises:
forwarding the multiple SSBs in multiple different given time periods, wherein indexes of one or more SSBs forwarded in each given time period are the same.

53. The SSB transmission apparatus of claim 50 or 52, wherein indexes of SSBs transmitted in different given time periods are different.

54. The SSB transmission apparatus of claim 50 or 52, wherein indexes of SSBs transmitted in different given time periods are the same.

55. The SSB transmission apparatus of claim 48, wherein the apparatus further comprises a fifth receiving module, a second forwarding module, a sixth receiving module, and a third forwarding module;

during a duration of transmitting an SSB with target index, the fifth receiving module is used for receiving an access request message transmitted from a terminal, wherein the SSB with target index comprises one or more SSBs with the same index among multiple SSBs transmitted from the network device;
the second forwarding module is used for forwarding the access request message to the network device;
the sixth receiving module is used for receiving an access response message transmitted from the network device; and
the third forwarding module is used for forwarding the access response message to the terminal using a target node state, wherein the target node state is a node state used in case of transmitting the SSB with target index.

56. A synchronization signal block (SSB) transmission apparatus, comprising:
a first transmitting module, used for transmitting multiple SSBs to a first auxiliary node, wherein indexes corresponding to the multiple SSBs form a first SSB group, and SSB groups corresponding to multiple SSBs transmitted to different auxiliary nodes are different.

57. The SSB transmission apparatus of claim 56, wherein the apparatus further comprises a third transmitting module; the third transmitting module is used for transmitting multiple pieces of first node state indication information to the first auxiliary node, wherein the first node state indication information is used to indicate a node state used by the first auxiliary node in case of forwarding SSB.

58. The SSB transmission apparatus of claim 56, wherein the apparatus further comprises a second synchronizing module;
the second synchronizing module is used for synchronizing with the first auxiliary node.

59. The SSB transmission apparatus of claim 58, wherein transmitting the multiple SSBs to the first auxiliary node comprises:
transmitting the multiple SSBs to the first auxiliary node in multiple different given time periods, wherein indexes of one or more SSBs transmitted in each given time period are the same.

**60.** The SSB transmission apparatus of claim 56, wherein transmitting the multiple SSBs to the first auxiliary node comprises:

transmitting a trigger message to the first auxiliary node; and
transmitting the multiple SSBs in multiple different given time periods, wherein indexes of one or more SSBs transmitted in each given time period are the same.

**61.** The SSB transmission apparatus of claim 60, wherein the different given time periods are consecutive.

**62.** The SSB transmission apparatus of claim 60, wherein the different given time periods are at intervals.

**63.** The SSB transmission apparatus of claim 56, wherein the apparatus further comprises a seventh receiving module and a fourth transmitting module; during a duration of transmitting an SSB with target index to the first auxiliary node, the seventh receiving module is used for receiving an access request message forwarded from the first auxiliary node; and
the fourth transmitting module is used for transmitting an access response message and second node state indication information to the first auxiliary node, wherein the second node state indication information is used to indicate the first auxiliary node to forward the access response message to a terminal using a target node state, and the target node state is a node state used by the first auxiliary node in case of forwarding the SSB with target index.

**64.** A computer-readable storage medium storing a computer program, wherein the computer program is used for causing a computer to perform the SSB transmission method of any of claims 1 to 5.

**65.** A computer-readable storage medium storing a computer program, wherein the computer program is used for causing a computer to perform the SSB transmission method of any of claims 6 to 13.

**66.** A computer-readable storage medium storing a computer program, wherein the computer program is used for causing a computer to perform the SSB transmission method of any of claims 14 to 21.

FIG. 1

FIG. 2

RIS

Base station

UE

FIG. 3

Receiving an SSB with target index forwarded from a first auxiliary node, where the SSB with target index includes one or more SSBs with the same index among multiple SSBs forwarded from the first auxiliary node, and SSB indicated by each index among the multiple SSBs forwarded from the first auxiliary node corresponds to one node state of the first auxiliary node

401

FIG. 4

FIG. 5

FIG. 6

Duration of an SSB group

FIG. 7

FIG. 8

FIG. 9

| | 1 | | 1 | | 1 | | 1 | |

| SSB1 | SSB4 | | SSB5 | SSB7 | |

List SSB index

| | 1 | | 1 | | 1 | | 1 | |

| SSB0 | SSB2 | | SSB3 | SSB6 | |

Non-list SSB index

FIG. 10

| SSB0 | SSB1 | | SSB2 | | SSB3 | | SSB4 | SSB5 | | SSB6 | | SSB7 | |
↑
OFDM

FIG. 11

| SSB0 | SSB1 | SSB1 | SSB1 | SSB1 | SSB2 | SSB3 | SSB4 | SSB4 | SSB4 | SSB4 | SSB5 | SSB5 | SSB5 | SSB5 | SSB6 | SSB7 | SSB7 | SSB7 | SSB7 |

FIG. 12

| Receiving multiple SSBs transmitted from a network device | 1301 |

↓

| Forwarding the multiple SSBs, where SSB indicated by each index corresponds to one node state of the first auxiliary node | 1302 |

FIG. 13

Transmitting multiple SSBs to a first auxiliary node, where indexes corresponding to the multiple SSBs form a first SSB group, and SSB groups corresponding to multiple SSBs transmitted to different auxiliary nodes are different

1401

FIG. 14

FIG. 15

FIG. 16

1710

Processor

1720

Memory

Bus interface

1700

Transceiver

FIG. 17

1801

First receiving module

FIG. 18

1901

Second receiving module

1902

Forwarding module

FIG. 19

2001

Transmitting module

FIG. 20

## INTERNATIONAL SEARCH REPORT

| International application No. |
| --- |
| **PCT/CN2023/099409** |

**A.    CLASSIFICATION OF SUBJECT MATTER**

H04W48/08(2009.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE; 3GPP: 同步信号块, 中转, 转发, 索引, 相同, 辅助节点, 中继, 指示, 状态, SSB, group, forward, index, same, RIS, relay, indicate, state

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114051284 A (CHINA ACADEMY OF INFORMATION AND COMMUNICATIONS TECHNOLOGY) 15 February 2022 (2022-02-15) description, paragraphs [0008]-[0031] and [0044]-[0125] | 1-13, 22-34, 43-55, 64, 65 |
| X | US 2022077922 A1 (QUALCOMM INC.) 10 March 2022 (2022-03-10) description, paragraphs [0016],[0053], [0054], [0143]-[0182], [0288], and [0289] | 14-21, 35-42, 56-63, 66 |
| A | WO 2022082774 A1 (HUAWEI TECHNOLOGIES CO., LTD.) 28 April 2022 (2022-04-28) entire document | 1-66 |
| A | WO 2022095979 A1 (VIVO COMMUNICATION TECHNOLOGY CO., LTD.) 12 May 2022 (2022-05-12) entire document | 1-66 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 September 2023** | **19 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099409**

| Patent document cited in search report | | | Publication date (day/month/year) | Patent family member(s) | | | Publication date (day/month/year) |
|---|---|---|---|---|---|---|---|
| CN | 114051284 | A | 15 February 2022 | None | | | |
| US | 2022077922 | A1 | 10 March 2022 | EP | 4211848 | A1 | 19 July 2023 |
|  |  |  |  | WO | 2022056507 | A1 | 17 March 2022 |
| WO | 2022082774 | A1 | 28 April 2022 | US | 2023262482 | A1 | 17 August 2023 |
|  |  |  |  | EP | 4224763 | A1 | 09 August 2023 |
| WO | 2022095979 | A1 | 12 May 2022 | US | 2023261708 | A1 | 17 August 2023 |
|  |  |  |  | EP | 4221296 | A1 | 02 August 2023 |
|  |  |  |  | CN | 114449528 | A | 06 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022107315454